# EUROPÄISCHE PATENTSCHRIFT

(11) **EP 3 088 638 B1**
(45) Veröffentlichungstag und Bekanntmachung des Hinweises auf die Patenterteilung: **16.10.2019**
(21) Anmeldenummer: 16155388.8
(22) Anmeldetag: 12.02.2016
(51) Int. Cl.: E05B 1/00, F24C 15/02, F16B 9/02, F16B 43/00

(54) **BÜGELGRIFFSYSTEM FÜR HYGIENEANWENDUNGEN**
BRACKET HANDLE SYSTEM FOR HYGIENE APPLICATIONS
SYSTEME DE POIGNEE EN FORME D'ETRIER POUR APPLICATIONS HYGIENIQUES

(30) Priorität: 19.02.2015 DE 102015202998
(43) Veröffentlichungstag der Anmeldung: 02.11.2016
(73) Patentinhaber: NovoNox KG, 71706 Markgröningen (DE)
(72) Erfinder: Leuze, Jürgen, 72172 Sulz am Neckar (DE)
(74) Vertreter: Kohler Schmid Möbus Patentanwälte

(56) Entgegenhaltungen:
- EP-A1- 1 269 888
- US-A1- 2006 043 039

## Beschreibung

Die Erfindung betrifft ein Bügelgriffsystem für Hygieneanwendungen, umfassend einen Bügelgriff zur Montage an einer Struktur, wobei eine außenliegende Grifffläche des Bügelgriffs einen Mittenrauwert Ra von höchstens 0,8 µm aufweist.

Das hygienegerechte Gestalten von Maschinen, Apparaten und Anlagen hat in Bereichen wie der Lebensmittelherstellung und -verarbeitung sowie der Pharmazie und Medizintechnik eine große Bedeutung. Eine Kontamination von Produkten mit Rückständen vorangegangener Produktionen, Mikroorganismen oder Schmutz aller Art ist sorgfältig zu verhindern, um eine Gefährdung der Gesundheit einzelner Personen oder größerer Konsumentengruppen zu vermeiden. Es ist daher darauf zu achten, dass sich keine Verschmutzungen wie beispielsweise Produktrückstände ablagern können, bzw. dass allfällige Verschmutzungen leicht und gründlich entfernt werden können. Oberflächen sind daher mit sehr geringer Rauigkeit auszuführen, so dass eine Anhaftung von Verschmutzungen verringert wird und ein Reinigen erleichtert wird. Weiterhin sind Spalten, Toträume und andere unzugängliche Bereiche durch konstruktive Maßnahmen zu vermeiden, da sich in diesen Mikroorganismen ansiedeln und vermehren können.

Für Oberflächen von hygienegerecht konstruierten Bauteilen wird in den EHEDG Guidelines - DOC 8 "Gestaltungskriterien für hygienegerechte Maschinen, Apparate und Komponenten" (2. Auflage, 2004) empfohlen, dass die Oberflächen über einen Mittenrauwert Ra gemäß ISO 4287:1982 von höchstens 0,8 µm verfügen sollten.

In den EHEDG Guidelines - DOC 8 wird weiterhin empfohlen, metallische Kontaktflächen außer Schweißverbindungen zu vermeiden. So müssen dauerhafte Metall-Metall-Verbindungen, die mit einem Produkt in Berührung kommen, durchgängig geschweißt und frei von Fehlern sein. Meist sind Schweißnähte zu verschleifen und/oder zu polieren.

Gegenwärtig werden daher Bügelgriffe, die an Strukturen in hygienisch sensiblen Bereichen eingesetzt werden sollen, an die Strukturen angeschweißt und die Schweißnähte verschliffen und poliert. Das Schweißen und die Nachbearbeitung durch Verschleifen und Polieren sind jedoch aufwendig und damit zeit- und kostenintensiv. Sowohl die Bügelgriffe als auch die Strukturen werden meist aus Edelstahl gefertigt.

Aus der WO 2014/166 677 A1 ist ein Verbindungssystem mit einer Schraube bekannt, wobei ein Kopf der Schraube einen Schraubenbund aufweist, der zu einer Anlagefläche hin abgerundet ist, wobei zwischen der Anlagefläche des Schraubenkopfs und einem Bauteil eine Dichtscheibe angeordnet ist. Die Dichtscheibe setzt sich aus einer Metallscheibe mit einem umlaufenden Elastomer-Dichtkörper zusammen, wobei der Dichtkörper im entspannten Zustand einen im Wesentlichen trapezförmigen Querschnitt aufweist, wobei sich der Dichtkörper radial nach außen hin in axialer Richtung verbreitert, und wobei der Dichtkörper sich im verpressten Zustand stufenlos an den abgerundeten Schraubenbund anlegt und axial vom Schraubenbund weg in radialer Richtung verbreitert.

Aus der US 2006/0043039 A1 ist ein Handgriff bekannt, der in einer Duschkabine montiert werden soll.

### Aufgabe der Erfindung

Der Erfindung liegt die Aufgabe zugrunde, ein für Hygieneanwendungen geeignetes Bügelgriffsystem anzugeben, das einfach und schnell an einer Struktur befestigt werden kann.

### Kurze Beschreibung der Erfindung

Diese Aufgabe wird gelöst durch ein Bügelgriffsystem der eingangs bezeichneten Art, das dadurch gekennzeichnet ist, dass der Bügelgriff an zwei voneinander entfernten Enden jeweils eine plane Montagefläche mit runder Außenkontur aufweist, dass der Bügelgriff an den Enden jeweils einen Gewindeabschnitt zur Befestigung des Bügelgriffs an der Struktur aufweist, dass die Montageflächen jeweils radial außen abgerundete Übergänge zu einer Mantelfläche des Bügelgriffs hin aufweisen, und dass das Bügelgriffsystem weiterhin zwei Dichtscheiben zur Anordnung zwischen den Montageflächen und der Struktur umfasst, wobei die Dichtscheiben jeweils eine radial innen liegende Tragscheibe und einen radial außen liegenden umlaufenden Dichtkörper aus einem Elastomer aufweisen, wobei der Dichtkörper im entspannten Zustand einen im Wesentlichen trapezförmigen Querschnitt aufweist, der sich nach radial außen hin in axialer Richtung aufweitet, und der zumindest an seinem radial äußeren Ende dicker ist als die Tragscheibe.

Ein solches Bügelgriffsystem kann in einfacher Weise an der Struktur angeschraubt werden. Die Montage ist in kurzer Zeit und mit einfachen Werkzeugen möglich. Insbesondere sind nach dem Befestigen des Bügelgriffs keinerlei Nacharbeiten notwendig.

Der Bügelgriff kann einstückig, einteilig oder mehrteilig, insbesondere mit zwei Griffschenkeln und dazwischen einem Griffsteg, ausgeführt sein. Bevorzugt wird der Bügelgriff aus einem metallischen Werkstoff gefertigt, insbesondere nichtrostendem Edelstahl, beispielsweise mit der Werkstoffnummer 1.4404. Eine Grifffläche mit Ra kleiner 0,8 µm, bevorzugt Ra kleiner 0,4 µm, gestattet kaum Schmutzablagerung bzw. ist leicht zu reinigen und ist daher für Hygieneanwendungen besonders gut geeignet. Die Grifffläche wird von allen in einem montierten Zustand außenliegenden Oberflächen des Bügelgriffs gebildet.

Der jeweilige Gewindeabschnitt ist bevorzugt orthogonal zu der Montagefläche ausgerichtet und konzentrisch zu der Montagefläche angeordnet. Der Gewindeabschnitt kann insbesondere als eine Gewindebohrung oder als ein Gewindezapfen ausgebildet sein. Zur Befestigung des Bügelgriffs kann entsprechend eine Schraube oder eine Mutter, insbesondere eine Hutmutter, verwendet werden, An der Struktur, an der der Bügelgriff befestigt wird, können Bohrungen zur Durchführung der Gewindezapfen oder Schrauben vorgesehen werden.

Typischerweise weist die jeweilige Dichtscheibe einen zentralen Durchbruch auf. Die Tragscheibe begrenzt ein Zusammendrücken des Dichtkörpers bei der Montage, so dass Beschädigungen des Dichtkörpers zuverlässig vermieden werden können. In einem montierten Zustand kann der Kraftfluss zwischen den anliegenden Bauteilen (Bügelgriff und Struktur) ganz überwiegend von der Tragscheibe vermittelt werden. Die Tragscheibe besteht bevorzugt aus einem metallischen Werkstoff, insbesondere Stahl oder Edelstahl. Alternativ kann sie aus einem Kunststoff, insbesondere einem faserverstärkten Kunststoff, gefertigt sein. Bevorzugt sind der Abrundungsradius des Übergangs und die Dichtscheibe derart aufeinander abgestimmt, dass sich im montierten Zustand eine stufenlose Anlage der Außenseite des Dichtkörpers an die Mantelfläche des Bügelgriffs und bevorzugt auch an die Struktur ergibt. Eine solche stufenlose Anlage des Dichtkörpers entspricht den Empfehlungen für hygienegerechtes Konstruieren gemäß den EHEDG Richtlinien. Durch die abgerundeten Übergänge und den trapezförmigen Dichtkörper kann auch eine Zentrierung der Dichtscheibe bzgl. der Montagefläche unterstützt werden.

### Bevorzugte Ausführungsformen der Erfindung

Bei einer bevorzugten Ausführungsform des erfindungsgemäßen Bügelgriffsystems weist wenigstens ein Griffschenkel des Bügelgriffs eine plane Auflagefläche auf, ein Griffsteg des Bügelgriffs weist wenigstens eine plane Anlagefläche auf, das Bügelgriffsystem umfasst für jedes Paar von Auflagefläche und Anlagefläche weiterhin eine Dichtscheibe zwischen der Anlagefläche und der Auflagefläche, wobei die Dichtscheibe eine radial innen liegende Tragscheibe und einen radial außen liegenden umlaufenden Dichtkörper aus einem Elastomer aufweist, wobei der Dichtkörper im entspannten Zustand einen im Wesentlichen trapezförmigen Querschnitt aufweist, der sich nach radial außen hin in axialer Richtung aufweitet, und der zumindest an seinem radial äußeren Ende dicker ist als die Tragscheibe, und der wenigstens eine Griffschenkel ist an dem Griffsteg des Bügelgriffs befestigt.

Durch die Befestigung des wenigstens einen Griffschenkels, und typischerweise zweier Griffschenkel, am Griffsteg (über eine Dichtscheibe) kann der Bügelgriff modular aufgebaut werden. Insbesondere können verschiedene Typen von Griffschenkeln mit demselben Griffsteg verwendet werden, oder auch verschiedene Griffstege mit denselben beiden Griffschenkeln verwendet werden. Dadurch kann die Höhe des Bügelgriffs über der Struktur oder auch die Länge des Bügelgriffs auf einfache Weise eingestellt werden. Die Dichtscheibe(n) ermöglichen die gegenseitige Befestigung von Griffschenkel(n) und Griffsteg(en) auf hygienisch sichere Weise. Typischerweise sind die Anlagefläche und die Auflagefläche orthogonal zu der Montagefläche am zugehörigen Griffschenkel ausgebildet.

Besonders bevorzugt ist eine Weiterbildung dieser Ausführungsform, bei der der wenigstens eine Griffschenkel an dem Griffsteg drehbar befestigt ist. Durch die Verdrehbarkeit können die beiden Griffschenkel eines Bügelgriffs gegeneinander verschränkt werden, so dass der Bügelgriff auch an einer Struktur mit zwei nicht miteinander fluchtenden (nicht parallelen) Strukturabschnitten montiert werden kann. Dies kann beispielsweise der Fall sein, wenn der Bügelgriff an unterschiedlichen Bauteilen einer mehrteiligen Struktur befestigt werden soll.

Bevorzugt ist dazu im befestigten Zustand der Griffschenkel bei konstanter axialer Relativposition von Griffschenkel und Griffsteg bezüglich der zugehörigen Drehachse gegen den Griffsteg drehbar. Die Verdrehung lockert dann nicht die Versiegelung zwischen der Anlagefläche und Auflagefläche mittels der Dichtscheibe. Allgemein ist ein Verdrehen des Griffschenkels gegenüber dem Griffsteg bevorzugt möglich, ohne die Befestigung zu lösen oder zu lockern. Bevorzugt kann der Griffschenkel in beide Richtungen unbegrenzt weit gedreht werden.

Bevorzugt sind die Anlagefläche und die Auflagefläche orthogonal zu der Montagefläche und orthogonal zu einer Hauptrichtung des Griffstegs des Bügelgriffs ausgerichtet. Insbesondere ist dann auch eine Montage an zwei gegeneinander abgewinkelten Strukturabschnitten möglich, indem der Griffsteg parallel zu einer (gedachten) Schnittlinie der beiden Strukturabschnitte ausgerichtet wird.

Typischerweise sind beide Griffschenkel drehbar (über Dichtscheiben) am Griffsteg angebunden. Es ist so ein verbesserter modularer Aufbau des Bügelgriffs möglich. Insbesondere können die Griffschenkel baugleich ausgeführt sein.

Bei einer vorteilhaften Weiterbildung weist die wenigstens eine Anlagefläche des Griffstegs eine runde Außenkontur auf, und die wenigstens eine Anlagefläche des Griffstegs weist radial außen einen abgerundeten Übergang zu einer Mantelfläche des Griffstegs auf. Der Dichtkörper der wenigstens einen weiteren Dichtscheibe kann sich dann stufenlos an den abgerundeten Übergang zu der Mantelfläche des Griffstegs anlegen. Es ist somit eine hygienisch sichere Anbindung des Griffstegs an den Griffschenkel möglich.

Besonders bevorzugt ist eine Weiterbildung, bei der an der Anlagefläche des Griffstegs ein Zapfen ausgebildet ist, der eine zumindest teilweise umlaufende Nut mit einer ersten Kontaktfläche aufweist, bei der der Griffschenkel an der Auflagefläche eine erste Ausnehmung aufweist, in der der Zapfen des Griffstegs aufgenommen ist, bei der der Griffschenkel eine zweite Ausnehmung aufweist, welche sich von der Montagefläche zur ersten Ausnehmung erstreckt, so dass die beiden Ausnehmungen einen gemeinsamen Hohlraum bilden, und bei der innerhalb der zweiten Ausnehmung in dem Griffschenkel ein Kontaktstück mit einer zweiten Kontaktfläche angeordnet ist, die an der ersten Kontaktfläche anliegt. Auf diese Weise ist eine baulich einfache gegenseitige Befestigung von Griffschenkel und Griffsteg möglich, wobei eine feste axiale Relativposition von Griffschenkel und Griffsteg mit wenigen Dichtscheiben eingerichtet werden kann.

Der Zapfen ist bevorzugt orthogonal und konzentrisch zu der Anlagefläche des Griffstegs angeordnet. Die erste Ausnehmung ist korrespondierend zu dem Zapfen ausgebildet und insbesondere orthogonal zu der Auflagefläche ausgerichtet. Der Zapfen und die erste Ausnehmung sind bevorzugt mit einem kreisförmigen Querschnitt ausgebildet, um eine Verdrehbarkeit von Griffsteg und Griffschenkel einzurichten.

Die zweite Ausnehmung kann bevorzugt als Verlängerung einer Gewindebohrung zur Befestigung des Bügelgriffs an der Struktur ausgeführt sein. Dadurch wird die Fertigung des Griffschenkels vereinfacht.

Die erste und zweite Ausnehmung des Griffschenkels sind bevorzugt jeweils nicht durchgehend, sondern in der Art eines Sacklochs ausgeführt. Vorteilhaft erstreckt sich die erste Ausnehmung von der Auflagefläche über die zweite Ausnehmung hinaus in einen jenseits der zweiten Ausnehmung des Griffschenkels gelegenen Bereich und der Zapfen des Griffstegs reicht bis in den Bereich der ersten Ausnehmung jenseits der zweiten Ausnehmung des Griffschenkels hinein. Ein solcher Bügelgriff weist vorderseitig der Struktur, an der der Bügelgriff befestigt ist, keine Verschraubungen auf, die für einen Benutzer des Bügelgriffs zugänglich sind und an denen sich Verschmutzungen ablagern können. Die Einrichtungen zur Befestigung des Griffstegs an dem Griffschenkel sind vollständig im Inneren des Griffschenkels angeordnet.

Zwischen dem Zapfen des Griffstegs und der ersten Ausnehmung des Griffschenkels besteht bevorzugt allenfalls ein geringes Spiel, insbesondere kann eine Übergangspassung oder eine leichte Presspassung vorgesehen sein. Dadurch wird verhindert, dass der Griffsteg und der Griffschenkel beim Andrücken der zweiten Kontaktfläche an die erste Kontaktfläche gegeneinander verkippen und sich der Zapfen in der ersten Ausnehmung verklemmt.

Die erste Kontaktfläche ist bevorzugt als Wandung einer im Querschnitt näherungsweise V-förmigen, zumindest teilweise umlaufenden Nut in dem Zapfen des Griffstegs ausgebildet, wobei die Neigung einer Nutwand besonders bevorzugt einer Neigung der zweiten Kontaktfläche des Kontaktstücks entspricht. Die zweite Kontaktfläche ist mit der ersten Kontaktfläche derart in Eingriff gebracht, dass eine Verpressung der Dichtscheibe zwischen der Anlagefläche und der Auflagefläche aufrechterhalten bleibt.

Eine vorteilhafte Weiterentwicklung sieht vor, dass die zweite Ausnehmung des Griffschenkels einen inneren Gewindeabschnitt zur Positionierung des Kontaktstücks aufweist. Dies stellt eine einfache und sichere Möglichkeit dar, das Kontaktstück derart in Eingriff mit der Nut des Zapfens zu bringen, dass die zweite Kontaktfläche an der ersten Kontaktfläche anliegt. Das Kontaktstück selbst oder ein Element zur Positionierung des Kontaktstücks (wobei das Element hinter dem Kontaktstück angeordnet wird) kann im inneren Gewindeabschnitt verschraubt werden. Die Position des Kontaktstücks kann durch Selbsthemmung des Gewindes gesichert werden.

Der innere Gewindeabschnitt kann als Verlängerung einer Gewindebohrung zur Befestigung des Bügelgriffs an der Struktur ausgeführt sein. Die Fertigung des Griffschenkels ist dann mit besonders wenigen Arbeitsschritten möglich.

Bevorzugt weist der innere Gewindeabschnitt jedoch einen geringeren Durchmesser als die Gewindebohrung auf. Der innere Gewindeabschnitt kann sich auf einen Bereich in der zweiten Ausnehmung erstrecken, der jenseits des inneren Endes der Gewindebohrung beginnt, und der vor oder an der ersten Ausnehmung endet. Das Kontaktstück oder das Element zur Positionierung des Kontaktstücks muss dann nicht ab der Montagefläche eingeschraubt werden, sondern kann bis hinter die Gewindebohrung zur Befestigung des Bügelgriffs an der Struktur eingeschoben werden. Dadurch kann die Montage des Bügelgriffs beschleunigt werden.

Bei einer bevorzugten Weiterentwicklung ist das Kontaktstück als eine Stiftschraube ausgeführt, die in dem inneren Gewindeabschnitt der zweiten Ausnehmung angeordnet ist, wobei die zweite Kontaktfläche von einer konischen Spitze der Stiftschraube gebildet wird. Das Kontaktstück kann dann selbst in den inneren Gewindeabschnitt eingeschraubt werden, und ein Element zur Positionierung des Kontaktstücks ist nicht notwendig (bzw. ist mit dem Kontaktstück in einem einzigen Bauteil zusammengefasst). Es ergibt sich daraus ein besonders einfacher Aufbau des Bügelgriffs. Auch kann die Montage durch die geringstmögliche Anzahl an Bauteilen erleichtert werden. Als Stiftschraube (Gewindestift) kann ein Gewindestift mit Innensechskant und Spitze gemäß DIN EN ISO 4027 verwendet werden.

Eine hierzu alternative, vorteilhafte Weiterentwicklung sieht vor, dass in der zweiten Ausnehmung eine mehrteilige Kontaktiereinrichtung, umfassend das Kontaktstück und ein Positionierelement für das Kontaktstück, angeordnet ist, dass sich das Kontaktstück mittelbar über ein Stützelement oder unmittelbar an dem Positionierelement abstützt, dass das Positionierelement in den inneren Gewindeabschnitt eingreift, und dass eine Stützfläche an dem Kontaktstück oder dem Stützelement oder dem Positionierelement als Kugelkappe ausgebildet ist, insbesondere wobei sich die Stützfläche auf einer stumpfen Spitze des Positionierelements abstützt. Dadurch wird verhindert, dass durch Reibschluss eine Kopplung einer Drehung des Griffschenkels um den Zapfen mit einer Drehung des Positionierelements um seine Achse erfolgt; die kugelkappenartige Stützfläche entkoppelt rotatorisch die mehreren Teile der Kontaktiereinrichtung. Somit kann sich das Positionierelement beim Verdrehen des Griffschenkels nicht lösen oder weiter festziehen. Bevorzugt ist das Positionierelement als eine Stiftschraube mit stumpfer Spitze ausgeführt. Als Stützelement mit als Kugelkappe ausgebildeter Stützfläche kann eine Kugel verwendet werden. Das Kontaktstück kann ein Stift sein, wobei die zweite Kontaktfläche von einer konischen Spitze des Stifts gebildet wird. Der Stift kann sich über die Kugel an der Stiftschraube abstützen. Wenn die Spitze der Stiftschraube und/oder die Rückseite des Stifts ballig, insbesondere halbkugelförmig, ausgeführt sind, kann die Kugel entfallen. Alternativ kann auch das Kontaktstück als eine Kugel ausgeführt sein. Die Stützfläche wird dann von einem ersten Teilbereich einer Oberfläche der Kugel gebildet und die zweite Kontaktfläche wird von einem zweiten Teilbereich der Oberfläche der Kugel gebildet. In einer anderen Weiterentwicklung kann eine Stiftschraube mit konischer Spitze in der zweiten Ausnehmung verwendet werden, auf deren Spitze sich ein Stift abstützt, der die zweite Kontaktfläche ausbildet.

Bei einer vorteilhaften Weiterbildung ist vorgesehen, dass an dem wenigstens einen Griffschenkel eine plane Sekundärfläche ausgebildet ist, die parallel zu der Auflagefläche ausgerichtet ist und die der Auflagefläche gegenüber liegt, dass der Griffsteg an der Anlagefläche einen orthogonal zu der Anlagefläche ausgerichteten Gewindeabschnitt aufweist, dass das Bügelgriffsystem ein Befestigungsmittel umfasst, das einen Gewindeabschnitt aufweist, um in den Gewindeabschnitt des Griffstegs einzugreifen, dass das Befestigungsmittel eine Anschraubfläche mit einer runden Außenkontur und radial außen einen abgerundeten Übergang in einen Bund des Befestigungsmittels aufweist, und dass das Bügelgriffsystem weiterhin eine Dichtscheibe zur Anordnung zwischen der Anschraubfläche und der Sekundärfläche umfasst, wobei die Dichtscheibe eine radial innen liegende Tragscheibe und einen radial außen liegenden umlaufenden Dichtkörper aus einem Elastomer aufweist, wobei der Dichtkörper im entspannten Zustand einen im Wesentlichen trapezförmigen Querschnitt aufweist, der sich nach radial außen hin in axialer Richtung aufweitet, und der zumindest an seinem radial äußeren Ende dicker ist als die Tragscheibe.

Das Befestigungsmittel kann insbesondere eine Mutter oder eine Schraube sein. Der Griffsteg weist entsprechend einen vorstehenden Gewindezapfen oder ein Innengewinde auf. Bevorzugt ist der Gewindeabschnitt des Griffstegs konzentrisch zu der Anlagefläche angeordnet und der Gewindeabschnitt des Befestigungsmittels konzentrisch zu der Anschraubfläche angeordnet. Eine Mutter ist bevorzugt als Hutmutter ausgebildet. Dadurch kann vermieden werden, dass verschmutzungsanfällige Gewindeabschnitte freiliegen.

Durch die Verschraubung mit der Sekundärfläche kann eine Verdrehbarkeit des Griffschenkels gegenüber dem Griffsteg eingerichtet werden, ohne dass im Inneren des Griffschenkels Einrichtungen zur Befestigung des Griffschenkels an dem Griffsteg angeordnet und fixiert werden müssen. Ein solcher Bügelgriff ist besonders einfach zu fertigen und zu montieren.

Bevorzugt ist eine Weiterbildung, bei der zwei Griffschenkel um eine gemeinsame Achse drehbar an dem Griffsteg angeordnet sind. Die Anlageflächen des Griffstegs können dann parallel zueinander ausgerichtet werden, und der Griffsteg kann somit besonders einfach gefertigt werden. Insbesondere kann der Griffsteg rotationssymmetrisch ausgeführt werden.

Eine alternative, vorteilhafte Weiterbildung sieht vor, dass zwei Griffschenkel um gegeneinander verschränkte Achsen drehbar an dem Griffsteg angeordnet sind. Bevorzugt schneiden sich die beiden Achsen, insbesondere unter einem rechten Winkel. Der Griffsteg kann gebogen oder abgewinkelt, insbesondere rechtwinklig abgewinkelt, ausgeführt sein oder schräg zu seiner Hauptrichtung ausgerichtete Anlageflächen aufweisen.

Durch die gegeneinander verschränkten Achsen entsteht ein zusätzlicher Freiheitsgrad zur Anpassung des Bügelgriffs an die relative Ausrichtung der Strukturabschnitte, an denen der Bügelgriff befestigt wird. Insbesondere muss der Griffsteg nicht parallel zu der (gedachten) Schnittlinie zweier nicht fluchtender Strukturabschnitte ausgerichtet werden.

Vorteilhaft ist auch eine Weiterbildung, bei der der Griffsteg im Wesentlichen zylinderförmig ausgebildet ist. Ein solcher Griffsteg ist besonders einfach zu fertigen. Bevorzugt weist der Griffsteg an zwei gegenüberliegenden Stirnseiten jeweils plane Anlageflächen auf, die orthogonal zu einer Längsachse des Griffstegs ausgerichtet sind. Ein Radius der Anlagefläche kann insbesondere um den Betrag des Abrundungsradius kleiner als ein Radius des Griffstegkorpus sein. Dadurch kann eine hygienegerechte, stufenlose Anlage des Dichtkörpers ermöglicht werden.

Besonders bevorzugt ist eine Weiterbildung, bei der der Griffsteg ein hohles Mittelstück aufweist, an welchem zwei Endstücke befestigt sind, an denen jeweils eine plane Anlagefläche des Griffstegs ausgebildet ist. Durch das hohle, insbesondere hohlzylindrische, Mittelstück kann gegenüber einem Griffsteg aus Vollmaterial Gewicht eingespart werden. Das hohle Mittelstück kann mit den Endstücken verschraubt oder verpresst sein. Bevorzugt wird das Mittelstück mit den Endstücken verschweißt und die Schweißnähte werden verschliffen, so dass eine leicht zu reinigende, glatte Oberfläche erhalten wird.

Eine vorteilhafte Weiterbildung sieht vor, dass der Griffschenkel im Wesentlichen zylinderförmig ausgebildet ist, und dass die Auflagefläche durch eine Rücknehmung im Zylindermantel ausgebildet ist. Dadurch kann der Griffschenkel einfach durch Drehen und Fräsen gefertigt werden.

Ein Radius der Montagefläche des Griffschenkels kann insbesondere um den Betrag des Abrundungsradius kleiner als ein Radius des Griffschenkelkorpus sein. Dies kann eine stufenlose Anlage des Dichtkörpers ermöglichen. Ein Radius des Griffschenkelkorpus ist größer als der Radius des Griffstegkorpus, insbesondere mindestens 15 % größer, um eine vollständige Auflage der Anlagefläche des Griffstegs zu ermöglichen.

Vorteilhaft ist auch eine Ausführungsform eines erfindungsgemäßen Bügelgriffsystems, bei der die Grifffläche einen Mittenrauwert Ra von höchstens 0,4 µm, insbesondere von höchstens 0,1 µm, aufweist. Oberflächen mit solch geringen Mittenrauwerten verringern die Anhaftung von Verschmutzungen und sind dadurch besser zu reinigen. Sie sind somit hygienisch vorteilhaft.
Derart kleine Mittenrauwerte lassen sich z.B. durch Schleifen oder Läppen, insbesondere Polierläppen, mit entsprechender Sorgfalt erreichen. Auch können Polierverfahren nach WO 2014/166 677 A1 verwendet werden.

Eine besonders bevorzugt Ausführungsform eines erfindungsgemäßen Bügelgriffsystems sieht vor, dass wenigstens ein Griffschenkel des Bügelgriffs an wenigstens einer Trennfuge in wenigstens zwei Griffschenkelabschnitte, insbesondere in einen Griffschenkelstumpf, an dem der Griffsteg befestigt ist, und in wenigstens ein Distanzstück, aufgeteilt ist, dass zwei benachbarte Griffschenkelabschnitte an der gemeinsamen Trennfuge jeweils plane Trennflächen, insbesondere mit runder Außenkontur, aufweisen, dass die Trennflächen radial außen abgerundete Übergänge zu einer Mantelfläche des jeweiligen Griffschenkelabschnitts aufweisen, und dass das Bügelgriffsystem für jede Trennfuge eine weitere Dichtscheibe umfasst, die zwischen den Trennflächen angeordnet ist, wobei die Dichtscheibe jeweils eine radial innen liegende Tragscheibe und einen radial außen liegenden umlaufenden Dichtkörper aus einem Elastomer aufweist, wobei der Dichtkörper im entspannten Zustand jeweils einen im Wesentlichen trapezförmigen Querschnitt aufweist, der sich nach radial außen hin in axialer Richtung aufweitet, und der zumindest an seinem radial äußeren Ende dicker ist als die Tragscheibe.

Durch Verwenden unterschiedlich langer und/oder unterschiedlich vieler Distanzstücke kann die Länge des Griffschenkels angepasst werden. Insbesondere ist es auf einfache Weise möglich, einen der beiden Griffschenkel des Bügelgriffs länger als den anderen Griffschenkel auszuführen, so dass der Bügelgriff beispielsweise an parallel versetzten Montageabschnitten einer Struktur befestigt werden kann. Durch die in der Trennfuge anzuordnende Dichtscheibe kann ein hygienegerechtes Verbinden der Griffschenkelabschnitte eingerichtet werden. Durch zwei Trennflächen mit runder Außenkontur an einer gemeinsamen Trennfuge und aufeinander abgestimmten Radien der Griffschenkelabschnitte (bei zumindest nahe an der Trennfuge zylindrischem Bau der Griffschenkelabschnitte) kann ein absatzfreier Übergang eingerichtet werden. Alternativ kann an einer gemeinsamen Trennfuge auch lediglich eine Trennfläche mit rundem Querschnitt (mit in der Größe auf diese abgestimmter Dichtscheibe) vorgesehen sein, und die andere Trennfläche überragt die erstgenannte Trennfläche, typischerweise allseitig.

Das wenigstens eine Distanzstück kann beispielsweise eine Durchgangsbohrung aufweisen, so dass der Bügelgriff mit Schrauben, die das wenigstens eine Distanzstück durchragen und in einen Gewindeabschnitt des Griffschenkels bzw. Griffschenkelstumpfs eingreifen, an der Struktur befestigt werden kann. Alternativ kann das wenigstens eine Distanzstück einen Gewindezapfen, insbesondere zur Befestigung am Griffschenkelstumpf oder an einem anderen Distanzstück, und ein Innengewinde, insbesondere zur Befestigung an der Struktur, aufweisen. In Sonderfällen kann das wenigstens eine Distanzstück zwei Gewindezapfen oder zwei Innengewindeabschnitte aufweisen. Das wenigstens eine Distanzstück und/oder der Griffschenkelstumpf können Schlüsselflächen, insbesondere in Form eines 2-, 4- oder 6-Kantbunds, aufweisen, um die Montage des Bügelgriffs zu erleichtern.

Vorteilhaft ist auch eine Ausführungsform, bei der ein Griffsteg des Bügelgriffs an wenigstens einer Teilungsfuge in wenigstens zwei Griffstegabschnitte, insbesondere in ein Griffsteghauptstück und in wenigstens ein Verlängerungsstück, aufgeteilt ist, bei der zwei benachbarte Griffstegabschnitte an der gemeinsamen Teilungsfuge jeweils plane Teilungsflächen, insbesondere mit runder Außenkontur, aufweisen, bei der die Teilungsflächen radial außen abgerundete Übergänge zu einer Mantelfläche des jeweiligen Griffstegabschnitts aufweisen, insbesondere bei der die Radien zweier benachbarter Griffstegabschnitte einander entsprechen, und bei der das Bügelgriffsystem für jede Teilungsfuge eine weitere Dichtscheibe umfasst, die zwischen den Teilungsflächen angeordnet ist, wobei die Dichtscheibe jeweils eine radial innen liegende Tragscheibe und einen radial außen liegenden umlaufenden Dichtkörper aus einem Elastomer aufweist, wobei der Dichtkörper im entspannten Zustand jeweils einen im Wesentlichen trapezförmigen Querschnitt aufweist, der sich nach radial außen hin in axialer Richtung aufweitet, und der zumindest an seinem radial äußeren Ende dicker ist als die Tragscheibe.

Es ist somit in einfacher Weise möglich, die Länge des Griffstegs an unterschiedliche Erfordernisse anzupassen. Durch die an den Trennfugen angeordneten Dichtscheiben kann sichergestellt werden, dass die hygienischen Erfordernisse einer spaltfreien, glatten Oberfläche eingehalten werden. Durch zwei Teilungsflächen mit runder Außenkontur an einer gemeinsamen Teilungsfuge und aufeinander abgestimmten Radien der Griffstegabschnitte (bei zumindest nahe an der Teilungsfuge zylindrischem Bau der Griffstegabschnitte) kann ein absatzfreier Übergang eingerichtet werden. Alternativ kann an einer gemeinsamen Teilungsfuge auch lediglich eine Teilungsfläche mit rundem Querschnitt (mit in der Größe auf diese abgestimmter Dichtscheibe) vorgesehen sein, und die andere Teilungsfläche überragt die erstgenannte Teilungsfläche, typischerweise allseitig.

Das wenigstens eine Verlängerungsstück kann insbesondere einen Gewindeabschnitt zur Befestigung an einem korrespondierenden Gewindeabschnitt des Griffstegs bzw. Griffsteghauptstücks oder einem weiteren Verlängerungsstück aufweisen. Zur Befestigung an dem Griffschenkel kann das wenigstens eine Verlängerungsstück ebenfalls einen Gewindeabschnitt oder einen Zapfen aufweisen. Alternativ kann das wenigstens eine Verlängerungsstück eine Durchgangsbohrung aufweisen.

In den Rahmen der vorliegenden Erfindung fällt auch ein modulares Bügelgriffsystem, umfassend
- mehrere unterschiedliche Griffschenkel, insbesondere unterschiedlich lange einteilige Griffschenkel oder mehrteilige Griffschenkel mit unterschiedlich langen Griffschenkelstümpfen, und/oder
- mehrere unterschiedliche Griffstege, insbesondere unterschiedlich lange einteilige Griffstege oder mehrteilige Griffstege mit unterschiedlich langen Griffsteghauptstücken, sowie
- mehrere Dichtscheiben, wobei die Dichtscheiben jeweils eine radial innen liegende Tragscheibe und einen radial außen liegenden umlaufenden Dichtkörper aus einem Elastomer aufweisen, wobei der Dichtkörper im entspannten Zustand einen im Wesentlichen trapezförmigen Querschnitt aufweist, der sich nach radial außen hin in axialer Richtung aufweitet, und der zumindest an seinem radial äußeren Ende dicker ist als die Tragscheibe,
wobei sich durch Auswahl aus den Einzelteilen ein Bügelgriffsystem nach einem der Ansprüche 1 bis 15 zusammenstellen lässt, das einen Bügelgriff zur Montage an einer Struktur umfasst, wobei eine außenliegende Grifffläche des Bügelgriffs einen Mittenrauwert Ra von höchstens 0,8 µm aufweist, wobei der Bügelgriff an zwei voneinander entfernten Enden jeweils eine plane Montagefläche mit runder Außenkontur aufweist, wobei der Bügelgriff an den Enden jeweils einen Gewindeabschnitt zur Befestigung des Bügelgriffs an der Struktur aufweist, wobei die Montageflächen jeweils radial außen abgerundete Übergänge zu einer Mantelfläche des Bügelgriffs hin aufweisen.

Ein erfindungsgemäßes modulares Bügelgriffsystem erlaubt es dem Anwender, ein für eine jeweilige Verwendung geeignetes Bügelgriffsystem individuell zu konfektionieren. Insbesondere können unübliche Kombinationen der Längen von Griffschenkeln und Griffstegen sowie Bügelgriffe mit unterschiedlich langen Griffschenkeln mit einem erfindungsgemäßen modularen Bügelgriffsystem aus Standardbauteilen zusammengestellt werden.

Bevorzugt ist eine Ausführungsform eines erfindungsgemäßen modularen Bügelgriffsystems, bei der das modulare Bügelgriffsystem weiterhin Distanzstücke und/oder Verlängerungsstücke umfasst, insbesondere wobei die Distanzstücke und/oder die Verlängerungsstücke unterschiedliche Längen aufweisen, und dass sich durch Auswahl aus den Einzelteilen auch ein Bügelgriffsystem nach Anspruch 16 oder 17 zusammenstellen lässt. Die Anpassbarkeit des Bügelgriffs wird dadurch weiter verbessert. Vorteilhaft ist insbesondere, dass es durch das Anordnen von Dichtscheiben an Teilungsfugen und Trennfugen ermöglicht werden kann, Bügelgriffe für Hygieneanwendungen ohne die Notwendigkeit einer Sonderanfertigung auch in Sondermaßen bereitzustellen. Bei Vorhandensein mehrerer unterschiedlich langer Distanzstücke und/oder Verlängerungsstücke kann zudem die Anzahl der vorzuhaltenden unterschiedlich langen Griffschenkelstümpfe und Griffsteghauptstücke reduziert werden.

Ebenfalls in den Rahmen der vorliegenden Erfindung fällt ein modulares Bügelgriffsystem, umfassend
- zwei Griffschenkelstümpfe,
- ein Griffsteghauptstück und
- mehrere Dichtscheiben, wobei die Dichtscheiben jeweils eine radial innen liegende Tragscheibe und einen radial außen liegenden umlaufenden Dichtkörper aus einem Elastomer aufweisen, wobei der Dichtkörper im entspannten Zustand einen im Wesentlichen trapezförmigen Querschnitt aufweist, der sich nach radial außen hin in axialer Richtung aufweitet, und der zumindest an seinem radial äußeren Ende dicker ist als die Tragscheibe, sowie
- mehrere unterschiedliche Distanzstücke und/oder mehrere unterschiedliche Verlängerungsstücke, insbesondere wobei die Distanzstücke und/oder die Verlängerungsstücke unterschiedliche Längen aufweisen,
und wobei sich durch Auswahl aus den Einzelteilen ein Bügelgriffsystem nach einem der Ansprüche 16 oder 17 zusammenstellen lässt, das einen Bügelgriff zur Montage an einer Struktur umfasst, wobei eine außenliegende Grifffläche des Bügelgriffs einen Mittenrauwert Ra von höchstens 0,8 µm aufweist, wobei der Bügelgriff an zwei voneinander entfernten Enden jeweils eine plane Montagefläche mit runder Außenkontur aufweist, wobei der Bügelgriff an den Enden jeweils einen Gewindeabschnitt zur Befestigung des Bügelgriffs an der Struktur aufweist, wobei die Montageflächen jeweils radial außen abgerundete Übergänge zu einer Mantelfläche des Bügelgriffs hin aufweisen. Die Modularität wird hierbei nur durch unterschiedliche Distanzstücke und/oder Verlängerungsstücke eingerichtet. Es sind nur jeweils ein Grundtypus von Griffschenkelstumpf und Griffsteghauptstück notwendig. Dadurch kann die Anzahl der vorzuhaltenden unterschiedlichen Bauteile reduziert werden, ohne die Anpassbarkeit der Hauptabmessungen des Bügelgriffs einzuschränken.

Die vorliegende Erfindung betrifft auch ein Verfahren zur Montage eines Bügelgriffsystems nach einem der Ansprüche 5 bis 8, umfassend die Schritte:
a) Anordnen der Dichtscheibe zwischen der Anlagefläche des Griffstegs und der Auflagefläche des Griffschenkels,
b) Ausrichten des Zapfens des Griffstegs mit der ersten Ausnehmung des Griffschenkels,
c) Einpressen des Zapfens in die erste Ausnehmung mittels einer Presse, bis die Tragscheibe der Dichtscheibe zwischen der Anlagefläche und der Auflagefläche verklemmt ist, und Aufrechterhalten der Presskraft,
d) Andrücken der zweiten Kontaktfläche des Kontaktstücks an die erste Kontaktfläche des Zapfens,
e) Zurücknehmen der Presskraft.

Die Presse kann dabei eine Handhebelpresse oder eine maschinell angesteuerte Presse sein.

Bei dem erfindungsgemäßen Verfahren wird die zweite Kontaktfläche des Kontaktstücks erst dann an die erste Kontaktfläche des Zapfens angedrückt, wenn die Dichtscheibe bereits zwischen der Anlagefläche des Griffstegs und der Auflagefläche des Griffschenkels eingeklemmt ist. Dadurch kann vermieden werden, dass beim Vortrieb des Kontaktstücks entlang der zweiten Ausnehmung durch das Kontaktstück die Klemmkraft zwischen Griffsteg und Griffschenkel aufgebracht werden muss. Bei letzterem Vorgehen bestünde die Gefahr, dass sich der Zapfen in der ersten Ausnehmung verklemmt, bevor die gewünschte Relativposition von Griffsteg und Griffschenkel (meist beidseitig an der Tragscheibe der Dichtscheibe anliegend) erreicht ist. Diese Gefahr kann durch das erfindungsgemäße Verfahren vermieden werden, indem der Zapfen erst zur Sicherung der extern bereits aufgebrachten Klemmkraft mit Hilfe des Kontaktstücks verspannt wird.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung, welche durch die unabhängigen Ansprüche definiert wird.

### Detaillierte Beschreibung der Erfindung und Zeichnung

Die Erfindung wird durch die unabhängigen Ansprüche definiert und ist beispielhaft in der Zeichnung dargestellt und wird anhand von Ausführungsbeispielen näher erläutert. Es zeigen:
- Fig. 1a: eine schematische Seitenansicht eines erfindungsgemäßen Bügelgriffsystems;
- Fig. 1b: einen schematischen Querschnitt durch das Bügelgriffsystem von Fig. 1a;
- Fig. 1c: eine perspektivische Darstellung des Bügelgriffsystems von Fig. 1a und 1b;
- Fig. 2a: eine schematische, perspektivische Darstellung einer Dichtscheibe zur Verwendung in erfindungsgemäßen Bügelgriffsystemen;
- Fig. 2b: einen schematischen Querschnitt durch die Dichtscheibe aus Fig. 2a;
- Fig. 3a: eine schematische Querschnittsansicht einer unverpressten Dichtscheibe während der Montage zwischen einem Griffschenkel eines erfindungsgemäßen Bügelgriffsystems und einer Struktur;
- Fig. 3b: eine schematische Querschnittsansicht der Dichtscheibe von Fig. 3a im verpressten Zustand zwischen dem Griffschenkel des erfindungsgemäßen Bügelgriffsystems und der Struktur;
- Fig. 4: eine schematische Querschnittsansicht durch ein erfindungsgemäßes Bügelgriffsystem mit Distanzstücken an den Griffschenkeln;
- Fig. 5: eine schematische Seitenansicht eines erfindungsgemäßen Bügelgriffsystems mit Distanzstücken an den Griffschenkeln und einem Verlängerungsstück am Griffsteg;
- Fig. 6: eine perspektivische Darstellung eines erfindungsgemäßen Bügelgriffsystems mit gegeneinander verschränkten Griffschenkeln, montiert an gegeneinander abgewinkelten Strukturabschnitten einer Struktur;
- Fig. 7: eine schematische Skizze eines erfindungsgemäßen Bügelgriffsystems mit abgewinkeltem Griffsteg;
- Fig. 8a: eine schematische Seitenansicht eines erfindungsgemäßen Bügelgriffsystems mit außenliegender Verschraubung des Griffstegs an den Griffschenkeln;
- Fig. 8b: eine schematische Querschnittsansicht des Bügelgriffsystems von Fig. 8a;
- Fig. 9a: eine schematische Darstellung eines ersten erfindungsgemäßen modularen Bügelgriffsystems umfassend mehrere unterschiedliche Griffstege und mehrere unterschiedliche Griffschenkel;
- Fig. 9b: eine schematische Darstellung eines zweiten erfindungsgemäßen modularen Bügelgriffsystems umfassend einen Griffsteg, zwei gleiche Griffschenkel sowie wenigstens ein Verlängerungsstück für den Griffsteg und wenigstens ein Distanzstück für die Griffschenkel;
- Fig. 10: eine schematische Querschnittsansicht durch ein erfindungsgemäßes Bügelgriffsystem mit einer mehrteiligen Kontaktiereinrichtung zum Verbinden des Griffschenkels mit dem Griffsteg;
- Fig. 11: eine schematische Seitenansicht eines erfindungsgemäßen Bügelgriffsystems mit einteiligem Bügelgriff.

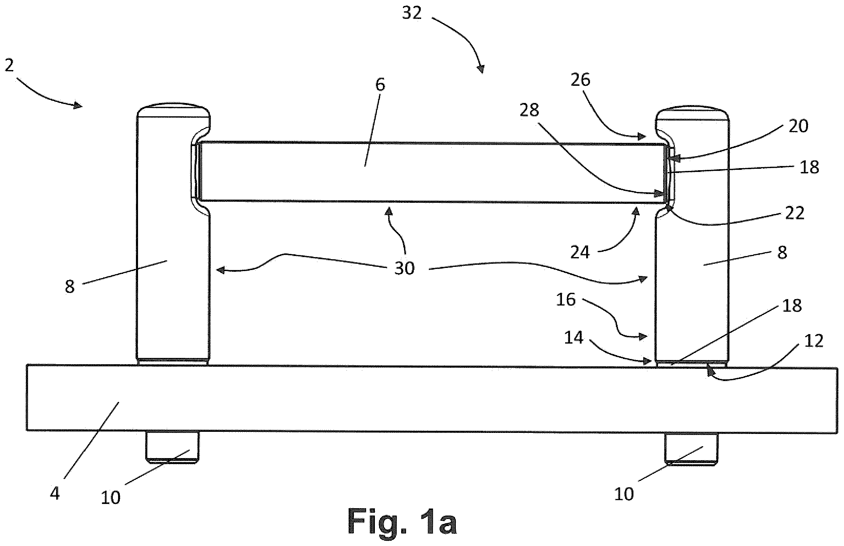

Die **Figur 1a** zeigt eine schematische Außenansicht einer ersten Ausführungsform eines erfindungsgemäßen Bügelgriffsystems 2 montiert an einer Struktur 4. Das Bügelgriffsystem 2 umfasst einen Griffsteg 6 und zwei Griffschenkel 8, hier jeweils gefertigt aus Edelstahl. Die Griffschenkel 8 sind mit Schrauben 10 an der Struktur 4 befestigt. Die beiden Griffschenkel 8 weisen der Struktur 4 zugewandt jeweils eine ebene, hier runde Montagefläche 12 auf, wobei jeweils abgerundete Übergänge 14 von den Montageflächen 12 zu Mantelflächen 16 der Griffschenkel 8 ausgebildet sind. Zwischen den Montageflächen 12 und der Struktur 4 ist jeweils eine Dichtscheibe 18 angeordnet. Die im Wesentlichen zylinderförmigen Griffschenkel 8 weisen hier einen größeren Durchmesser auf als der ebenfalls im Wesentlichen zylinderförmige Griffsteg 6.

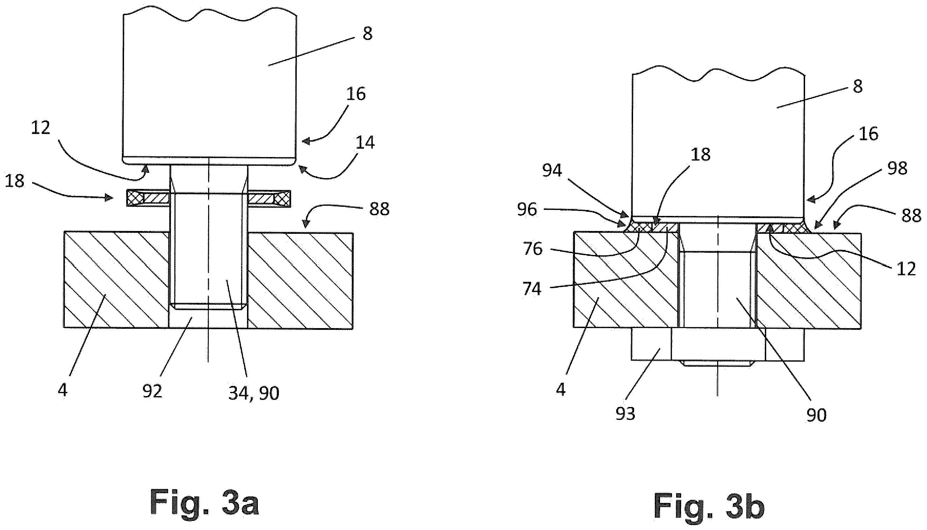

An dem Griffsteg 6 sind beidseitig ebene, hier runde Anlageflächen 20 ausgebildet, die jeweils abgerundete Übergänge 22 zu einer Mantelfläche 24 des Griffstegs 6 hin aufweisen. An den Griffschenkeln 8 ist jeweils eine Rücknehmung 26 vorgesehen, die jeweils eine ebene Auflagefläche 28 ausbildet. Zwischen den Anlageflächen 20 und den Auflageflächen 28 ist jeweils eine Dichtscheibe 18 angeordnet. Die ebene Anlagefläche 20 ist mit ihrem Durchmesser auf den Durchmesser der Dichtscheibe 18 abgestimmt, so dass sich im verspannten Zustand ein stufenloser Übergang ergibt. Die ebene Auflagefläche 28 ist bevorzugt größer als die von der Dichtscheibe 18 im verspannten Zustand benötigte Kontaktfläche, so dass die Dichtscheibe 18 nicht über die Auflagefläche 28 hinaus ragt. Aus Gründen der zeichnerischen Darstellbarkeit sind die Dichtscheiben 18 hier jeweils in ihrer unverformten, entspannten Konfiguration gezeigt; in Fig. 3b werden die Kontakt- und Übergangsverhältnisse zwischen Dichtscheiben 18 und angrenzenden Bauteilen des Bügelgriffsystems 2 detaillierter dargestellt.

Ein Bügelgriff 32 (umfassend hier den Griffsteg 6 und die Griffschenkel 8) des Bügelgriffsystems 2 weist eine Grifffläche 30 an den Außenseiten des Griffstegs 6 und der Griffschenkel 8 mit einem Mittenrauwert Ra von 0,8 µm oder besser auf. Durch die Dichtscheiben 18 zwischen dem Griffsteg 6 und den Griffschenkeln 8 kann ein einfaches Reinigen der Grifffläche 30 auch dort ermöglicht werden, wo der Griffsteg 6 und die Griffschenkel 8 aneinander befestigt sind.

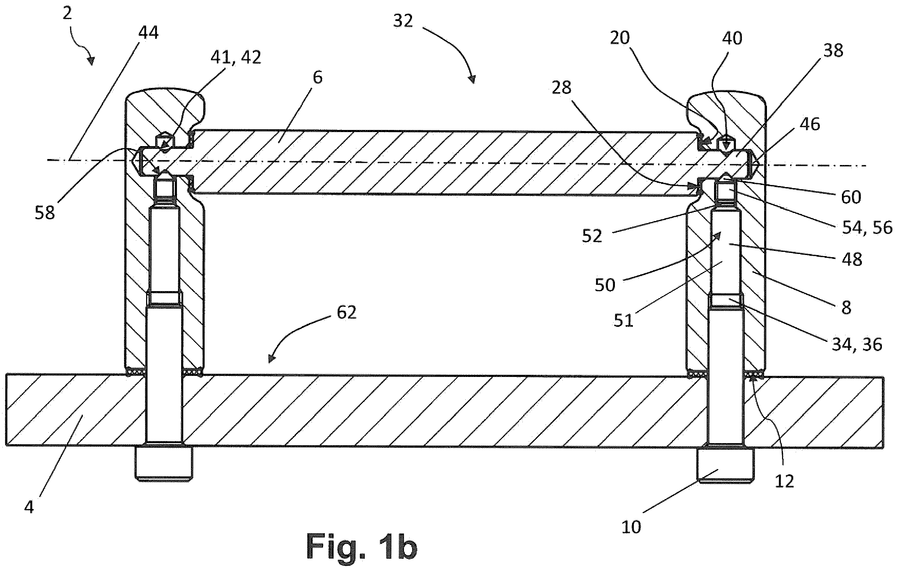

In **Figur 1b** ist eine Querschnittsansicht des Bügelgriffsystems 2 aus Fig. 1a dargestellt. Die Griffschenkel 8 weisen der Struktur 4 zugewandt jeweils einen Gewindeabschnitt 34 auf, der hier als eine Gewindebohrung 36 ausgeführt ist. In die Gewindebohrung 36 greifen Schrauben 10 ein, die die Struktur 4 durchragen, um den Bügelgriff 32 an der Struktur 4 zu befestigen. Durch die Dichtscheiben 18 zwischen den Montageflächen 12 der Griffschenkel 8 und der mit einer ebenen Oberfläche 62 ausgebildeten Struktur 4 kann eine hygienisch sichere Anbindung des Bügelgriffs 32 erreicht werden.

An dem Griffsteg 6 sind beidseitig Zapfen 38 ausgebildet, die über die Anlageflächen 20 hervorstehen. Die Zapfen 38 weisen hier jeweils eine umlaufende, V-förmige Nut 40 auf. Eine von der jeweiligen Anlagefläche 20 entfernte Nutwand 41 bildet dabei eine erste Kontaktakfläche 42 aus. Der Griffsteg 6 ist hier rotationssymmetrisch um eine Achse 44 ausgebildet. Die Zapfen 38 sind jeweils konzentrisch zu der Achse 44 angeordnet.

An den Auflageflächen 28 der Griffschenkel 8 ist jeweils eine erste Ausnehmung 46 vorgesehen, in die die Zapfen 38 eingeführt sind. Die erste Ausnehmung 46 und die Zapfen 38 sind dazu in ihren Durchmessern und Längen bzw. Tiefen aufeinander abgestimmt.

Von den Montageflächen 12 der Griffschenkel 8 erstreckt sich jeweils eine zweite Ausnehmung 48 bis zu der ersten Ausnehmung 38, so dass ein gemeinsamer Hohlraum 50 entsteht. Insbesondere reicht hier die erste Ausnehmung 46 in Richtung der Achse 44 über die zweite Ausnehmung 48 hinaus. Dies unterstützt die Führung des Zapfens 38 in der ersten Ausnehmung 46. Im dargestellten Ausführungsbeispiel überragt aus fertigungstechnischen Gründen auch die zweite Ausnehmung 48 in Fig. 1b nach oben die erste Ausnehmung 46.

Die zweite Ausnehmung 48 umfasst somit neben der der Montagefläche 12 zugewandten Gewindebohrung 36 und einem daran anschließenden, mittleren Ausnehmungsabschnitt 51, der sich wiederum an den mittleren Ausnehmungsabschnitt 51 anschließt, auch einen inneren Gewindeabschnitt 52. Der innere Gewindeabschnitt 52 dient zur Positionierung eines Kontaktstücks 54, das hier als Stiftschraube 56 ausgeführt ist. Die Stiftschraube 56 kann auch als Gewindestift bezeichnet werden. Das Kontaktstück 54 weist eine zweite Kontaktfläche 58 auf, die hier von einer konischen Spitze 60 der Stiftschraube 56 gebildet wird.

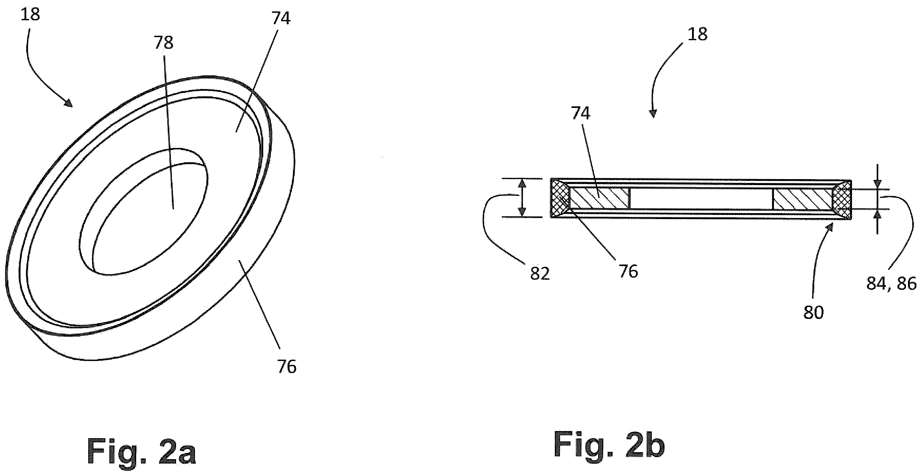

Um einen Griffschenkel 8 an dem Griffsteg 6 zu befestigen, wird zunächst der Zapfen 38 des Griffstegs 6 in die erste Ausnehmung 46 des Griffschenkels 8 eingeführt und der Griffsteg 6 an den Griffschenkel 8 angepresst, insbesondere mit einer Handpresse (nicht dargestellt), soweit es eine Tragscheibe (vgl. Fig. 2a, 2b) der dabei verpressten Dichtscheibe 18 zulässt. Sodann werden die erste Kontaktfläche 42 und die zweite Kontaktfläche 58 derart miteinander in Eingriff gebracht, dass die Dichtscheibe 18 zwischen der Anlagefläche 20 und der Auflagefläche 28 verpresst bleibt. Die das Kontaktstück 54 bildende Stiftschraube 56 wird also bei bereits in die erste Ausnehmung 46 eingeführtem Zapfen 38 entlang des inneren Gewindeabschnitts 52 eingeschraubt, bis die erste Kontaktfläche 42 und die zweite Kontaktfläche 58 fest aneinander gedrückt sind. Sodann braucht der Griffsteg 6 nicht mehr entlang der Achse 44 an den Griffschenkel 8 angepresst zu werden, insbesondere kann die Handpresse wieder gelockert werden. Die Position des Kontaktstücks 54 wird durch Selbsthemmung im inneren Gewindeabschnitt 52 gesichert.

Die Verbindung von Griffsteg 6 und Griffschenkeln 8 über die Zapfen 38 und die ersten Ausnehmungen 46 ermöglicht es, die Griffschenkel 8 gegenüber dem Griffsteg 6 zu verdrehen. Insbesondere können die Griffschenkel 8 gegeneinander verschränkt werden. Im Ausführungsbeispiel von Fig. 1b ist die Verdrehbarkeit um die gemeinsame Achse 44 eingerichtet. Hier können die Griffschenkel 8 zudem unbegrenzt weit in beide Richtungen gegenüber dem Griffsteg 6 gedreht werden. Durch den Eingriff des Kontaktstücks 54 in die Nut 40 kann zudem eine Verdrehung der Griffschenkel 8 erfolgen, wenn die Griffschenkel 8 an dem Griffsteg 6 befestigt sind, ohne die Befestigung lösen oder lockern zu müssen. Der vormontierte Bügelgriff 32 kann dadurch bei der Montage an der Struktur 4 leicht an allenfalls vorhandene Fluchtungsfehler der Oberfläche 62 der Struktur 4 angepasst werden.

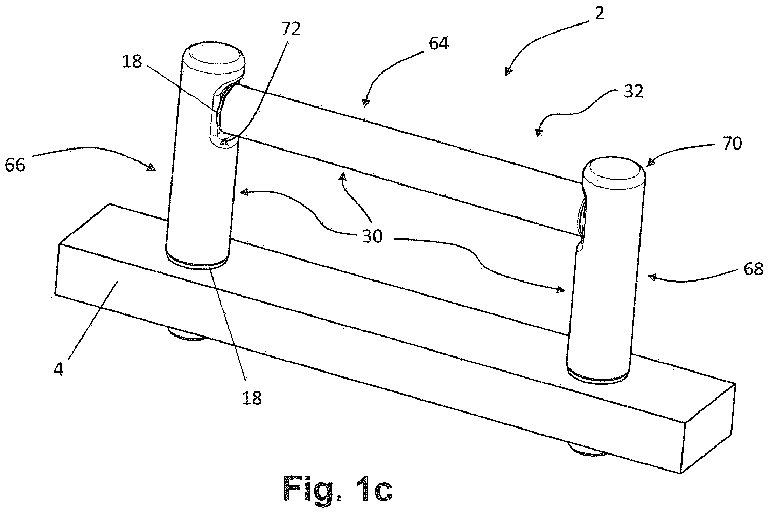

Die **Figur 1c** zeigt eine isometrische Ansicht des Bügelgriffsystems 2 aus den Figuren 1a und 1b, das an der Struktur 4 befestigt ist. Zu beachten ist hier insbesondere, dass alle außenliegenden Oberflächen 64, 66 und 68 des Griffstegs 6 und der Griffschenkel 8, welche zusammen die Grifffläche 30 bilden, auf geringe Mittenrautiefen Ra von 0,8 µm oder besser poliert sind. Auch sind Kanten 70, 72 der Griffschenkel 8 abgerundet ausgeführt. Zwischen allen benachbarten Bauteilen des Bügelgriffs 32 selbst sowie zwischen den Griffschenkeln 8 und der Struktur 4 sind Dichtscheiben 18 angeordnet, um glatte Übergänge zu erzielen. Dadurch können Schmutzanhaftungen am Bügelgriff 32 reduziert werden und die Reinigung kann erleichtert werden.

Die **Figur 2a** zeigt eine schematische perspektivische Außenansicht einer beispielhaften Dichtscheibe 18 zur Verwendung in einem erfindungsgemäßen Bügelgriffsystem. Die Dichtscheibe 18 umfasst eine radial innen liegende Tragscheibe 74 und einen radial außen liegenden Dichtkörper 76. Die Tragscheibe 74 besteht hier aus einem metallischen Werkstoff, nämlich Edelstahl. Alternativ kann die Tragscheibe 74 aus einem harten Kunststoff, insbesondere einem faserverstärkten Kunststoff gefertigt werden. Der Dichtkörper 76 ist aus einem Elastomer gefertigt. Die Tragscheibe 74 weist eine zentrale Ausnehmung 78 auf, die zur Durchführung beispielsweise der Schrauben 10 oder Zapfen 38 (siehe Fig. 1b) dienen kann.

In der **Figur 2b** ist ein Querschnitt durch die Dichtscheibe 18 aus Fig. 2a dargestellt. Der Dichtkörper 76 erweitert die Tragscheibe 74 nach radial außen hin. Im entspannten Zustand weist der Dichtkörper 76 einen im Wesentlichen trapezförmigen Querschnitt 80 auf, der sich nach radial außen hin in axialer Richtung aufweitet. Eine äußere Dicke 82 des Dichtkörpers 76 ist größer als eine innere Dicke 84 des Dichtkörpers 76. Die innere Dicke 84 des Dichtkörpers entspricht hier auch einer Dicke 86 der Tragscheibe 74. In der gezeigten Ausführungsform sind die Innenseite und die Außenseite des Dichtkörpers 76 im Querschnitt zueinander parallel orientiert. Weiterhin weisen hier die obere und untere Flachseite des Dichtkörpers 76 jeweils einen (kleinen) Knick auf. Bei anderen Ausführungsformen können die Flachseiten auch gerade verlaufen.

In Fig. 3a und 3b wird die Verformung einer Dichtscheibe 18 bei der Montage anhand eines Beispiels erläutert. Die **Figur 3a** zeigt schematisch einen Zwischenzustand bei der Montage eines Griffschenkels 8 an einer Struktur 4. Zwischen der Montagefläche 12 des Griffschenkels 8 und einer dem Griffschenkel 8 zugewandten planen Außenfläche 88 der Struktur 4 ist eine Dichtscheibe 18 angeordnet. Die plane Montagefläche 12 weist außenseitig einen abgerundeten Übergang 14 zu einer zylinderförmigen Mantelfläche 16 des Griffschenkels 8 auf. An der Montagefläche 12 ist ein Gewindeabschnitt 34 angeordnet, der hier als Gewindezapfen 90 ausgebildet ist, und der zur Befestigung des Griffschenkels 8 an der Struktur 4 dient. Der Gewindezapfen 90 wird dazu durch eine Bohrung 92 der Struktur 4 geführt.

In der **Figur 3b** sind die Bauteile aus Fig. 3a im montierten Zustand dargestellt. Der Griffschenkel 8 ist mittels einer Mutter 93, die auf den Gewindezapfen 90 aufgeschraubt ist, an der Struktur 4 befestigt. Die Dichtscheibe 18 ist zwischen der planen Montagefläche 12 des Griffschenkels 8 und der Außenfläche 88 der Struktur 4 verpresst. Der Dichtkörper 76 der Dichtscheibe 18 ist bei der Montage soweit zusammengedrückt worden, dass die Montagefläche 12 und die Außenfläche 88 an der Tragscheibe 74 anliegen. Die Tragscheibe 74 vermittelt wesentlich die mechanische Wechselwirkung zwischen der Montagefläche 12 und der Außenfläche 88.

Durch das Zusammendrücken des Dichtkörpers 76 hat sich dieser gegenüber dem entspannten Zustand in radialer Richtung geweitet. Der Dichtkörper 76 liegt im Bereich des abgerundeten Übergangs 14 derart an dem Griffschenkel 8 an, dass sich ein stufenloser Übergang 94 von der Mantelfläche 16 des Griffschenkels 8 auf eine Außenseite 96 des Dichtkörpers 76 einstellt. Um den stufenlosen Übergang 94 einzurichten, kann der Abrundungsradius des abgerundeten Übergangs 14 geeignet auf die Geometrie der Dichtscheibe 18, insbesondere des Dichtkörpers 76, abgestimmt werden (Man beachte, dass sich beispielsweise an Anlageflächen, Anschraubflächen, Trennflächen und Teilungsflächen mit abgerundetem Übergang jeweils ähnliche stufenlose Übergänge wie an der hier illustrierten Montagefläche 12 einstellen). Im Bereich des Übergangs 98 von der Außenseite 96 des Dichtkörpers 76 zu der Außenfläche 88 der ebenen Struktur 4 läuft der Dichtkörper 76 flach auf der ebenen Struktur aus, so dass auch hier keine Toträume ausgebildet werden, in denen sich Verschmutzungen ablagern oder Mikroorganismen vermehren können (Man beachte, dass sich beispielsweise an einer ebenen Auflagefläche ein ähnlicher, auslaufender Übergang wie an der hier illustrierten Struktur 4 einstellt).

Die in der Fig. 3b dargestellten Kontakt- und Übergangsverhältnisse stehen stellvertretend auch für alle andere Stellen, an denen in einem erfindungsgemäßen Bügelgriffsystem Dichtscheiben 18 angeordnet sind. Es kann dadurch erreicht werden, dass das Bügelgriffsystem außenseitig keinerlei Toträume oder Stufen an den Dichtscheiben 18 aufweist. Es sei hier nochmals darauf hingewiesen, dass in den Konstruktionsskizzen in den Fig. 1a-c, Fig. 4-6 und Fig. 8a-b aus zeichnerischen Gründen jeweils die unverformte Konfiguration der Dichtscheiben 18 eingezeichnet ist. Tatsächlich stellen sich im montierten Zustand an den Dichtscheiben 18 jeweils die hier beschrieben Kontakt- und Übergangsverhältnisse ein.

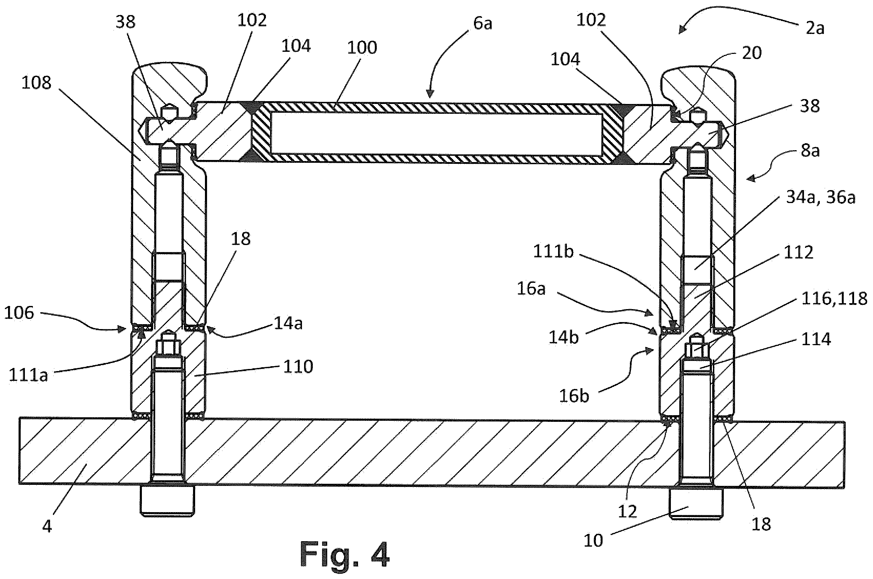

Die **Figur 4** zeigt eine Querschnittsansicht einer vorteilhaften Ausführungsform eines erfindungsgemäßen Bügelgriffsystems 2a. Der Griffsteg 6a weist hier ein hohles Mittelstück 100 auf, an dem zwei Endstücke 102 befestigt sind; die Endstücke 102 bilden jeweils plane Anlageflächen 20 aus. In Fig. 4 sind die Endstücke 102 mit dem Mittelstück 100 verschweißt und die Schweißnähte 104 sind verschliffen und poliert, so dass der Griffsteg 6a außenseitig glatt ist und keine Angriffsfläche für Verschmutzungen bietet. Die Endstücke 102 weisen Zapfen 38 zur Befestigung an den Griffschenkeln 8a auf.

Bei dem in der Fig. 4 dargestellten Bügelgriffsystem 2a sind die Griffschenkel 8a zweiteilig ausgeführt. In einer Trennfuge 106 werden die Griffschenkel 8a in jeweils einen Griffschenkelstumpf 108 und ein Distanzstück 110 unterteilt. In den Trennfugen 106 ist an planen Trennflächen 111a, 111b mit runder Außenkontur und abgerundeten Übergängen 14a, 14b zu Mantelflächen 16a, 16b jeweils eine Dichtscheibe 18 zwischen dem Griffschenkelstumpf 108 und dem Distanzstück 110 angeordnet, so dass jeweils ein stufenloser Übergang ausgebildet wird.

Die Distanzstücke 110 weisen jeweils einen Gewindezapfen 112 auf, der in einen als Gewindebohrung 36a ausgeführten Gewindeabschnitt 34a der Griffschenkelstümpfe 108 eingeschraubt ist. Alternativ kann ein Gewindezapfen auch an dem Griffschenkelstumpf 108 ausgebildet sein und das Distanzstück kann eine entsprechende Gewindebohrung aufweisen (nicht näher dargestellt). Um das Distanzstück 110 in den Griffschenkelstumpf 108 einschrauben zu können, ist in Verlängerung eines Gewindeabschnitts 114 eine Schlüsselfläche 116 ausgeformt, hier als Innensechskant 118. Der Gewindeabschnitt 114 (der hier als eine Gewindebohrung ausgebildet ist) dient zur Befestigung des Distanzstücks 110 an der Struktur 4 mittels Schrauben 10, wobei das Distanzstück 110 über eine Montagefläche 12 und eine Dichtscheibe 18 auf der Struktur 4 aufsitzt. In einer weiteren alternativen Ausführungsform kann das Distanzstück 110 auch mit einer Durchgangsbohrung ausgeführt sein, so dass die Schrauben 10 das Distanzstück 110 durchragen und direkt in die Gewindebohrung 36a des Griffschenkelstumpfes 108 eingreifen können (nicht näher dargestellt).

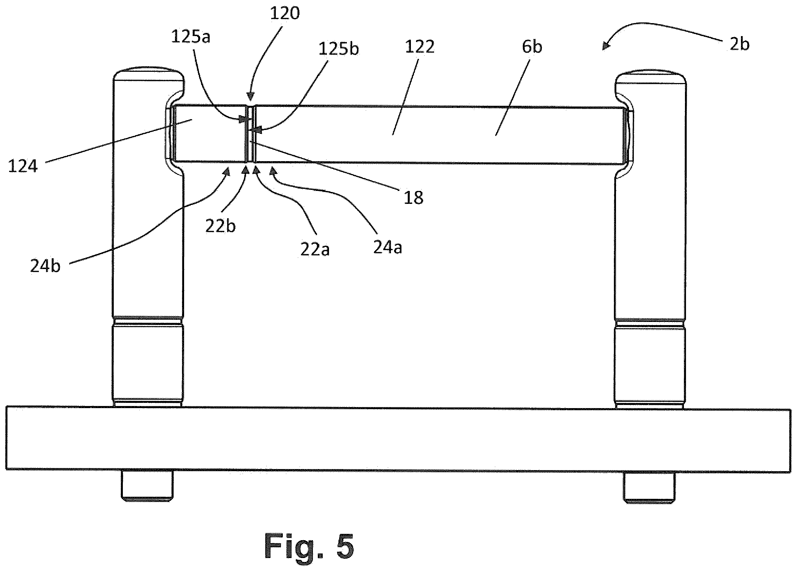

Die **Figur 5** zeigt eine schematische Seitenansicht eines erfindungsgemäßen Bügelgriffsystems 2b, bei dem ein Griffsteg 6b an einer Teilungsfuge 120 in ein Griffsteghauptstück 122 und ein Verlängerungsstück 124 aufgeteilt ist. In der Teilungsfuge 120 ist eine Dichtscheibe 18 zwischen dem Griffsteghauptstück 122 und dem Verlängerungsstück 124 angeordnet, so dass der zweiteilige Griffsteg 6b außenseitig glatt und stufenlos ist. An der Teilungsfuge 120 sind dazu plane Teilungsflächen 125a, 125b mit runder Außenkontur ausgebildet, die abgerundete Übergänge 22a, 22b zu Mantelflächen 24a, 24b aufweisen.

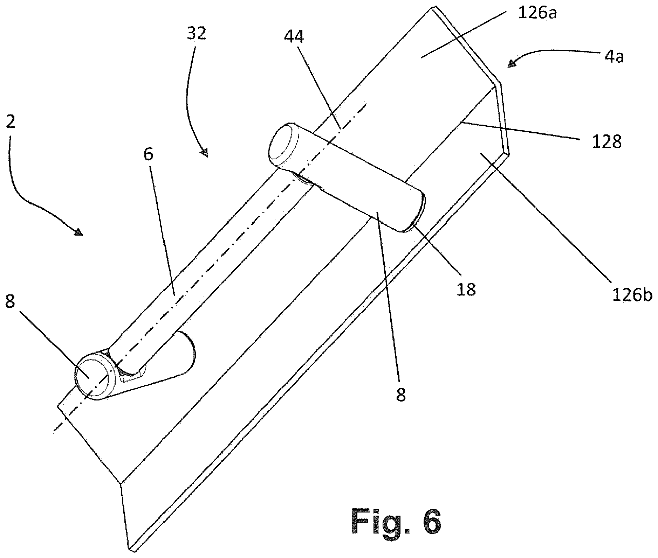

Die **Figur 6** zeigt schematisch einen Bügelgriff 32 eines erfindungsgemäßen Bügelgriffsystems 2, wie etwa in Fig. 1a-1c dargestellt, wobei der Bügelgriff 32 an einer Struktur 4a mit zwei gegeneinander abgewinkelten Strukturabschnitten 126a, 126b montiert ist. Die Griffschenkel 8 des Bügelgriffs 32 sind dazu entsprechend der Abwinkelung der Strukturabschnitte 126a, 126b gegeneinander verschränkt, d.h. um die gemeinsame Achse 44 durch den Griffsteg 6 verdreht. Um eine vollflächige Auflage der Dichtscheiben 18 zwischen den Griffschenkeln 8 und den Strukturabschnitten 126a, 126b zu ermöglichen, ist die Achse 44 parallel zu der Schnittlinie 128 der Strukturabschnitte 126a, 126b ausgerichtet.

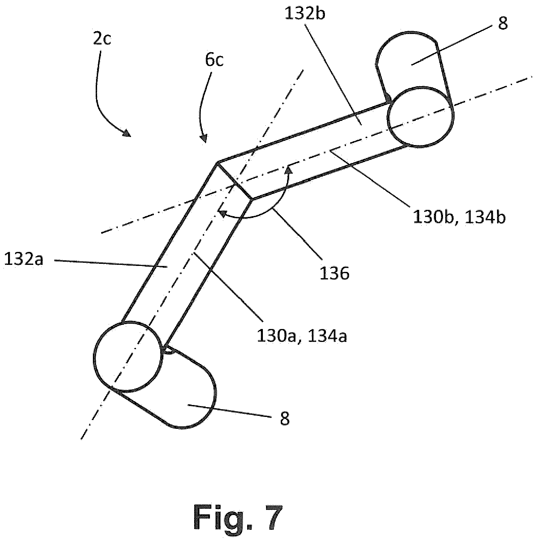

In **Figur 7** ist schematisch ein Bügelgriffsystem 2c in Aufsicht dargestellt, bei dem zwei Griffschenkel 8 um gegeneinander verschränkte Achsen 130a, 130b drehbar an einem Griffsteg 6c befestigt sind. Der Griffsteg 6c ist hier mit zwei gegeneinander abgewinkelten Griffstegsegmenten 132a, 132b ausgeführt. Die Drehachsen 130a, 130b, um die die Griffschenkel 8 drehbar sind, entsprechen in diesem Ausführungsbeispiel den Segmentachsen 134a, 134b der Griffstegsegmente 132a, 132b. Ein Winkel 136 zwischen den Drehachsen 130a und 130b, bzw. zwischen den Segmentachsen 134a und 134b, beträgt hier ca. 120°. Je nach Anforderungen an das Bügelgriffsystem 2c sind jedoch unterschiedliche Werte des Winkels 136 möglich, insbesondere kann der Winkel 136 auch 90° betragen. Durch die gegeneinander verschränkten Drehachsen 130a, 130b kann das Bügelgriffsystem 2c universell an gegeneinander verkippten Strukturabschnitten eingesetzt werden. Insbesondere kann das Bügelgriffsystem 2c an gegeneinander abgewinkelten Strukturabschnitten montiert werden, ohne dass der Griffsteg 6c eine bestimmte Ausrichtung relativ zu einer Schnittlinie der Strukturabschnitte aufweisen muss.

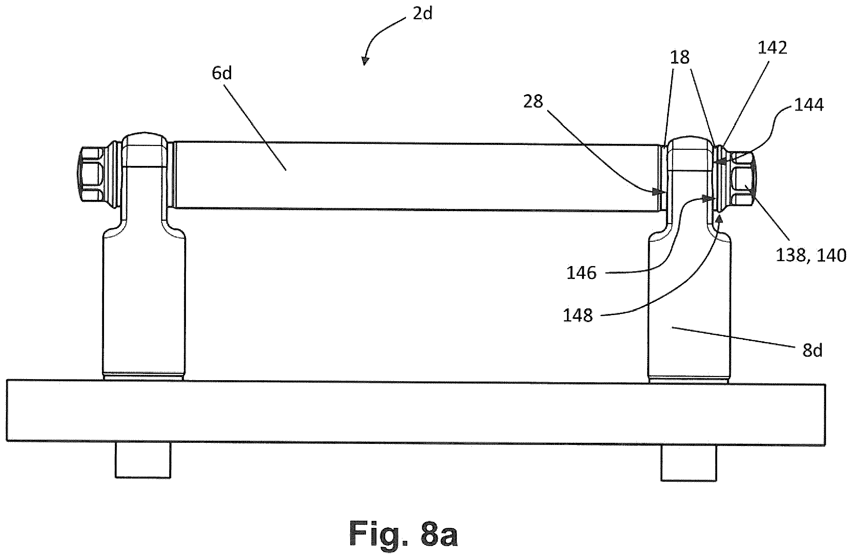

Die **Figur 8a** zeigt eine schematische Seitenansicht einer weiteren Ausführungsform eines erfindungsgemäßen Bügelgriffsystems 2d. Ein Griffsteg 6d ist hierdurch außenliegende Befestigungsmittel 138 mit Griffschenkeln 8d verbunden. Die Befestigungsmittel 138 sind hier als Bundschrauben 140 mit einem Bund 142 ausgeführt. Die Griffschenkel 8d weisen neben einer planen Auflagefläche 28 für eine Dichtscheibe 18 zwischen Griffsteg 6d und Griffschenkel 8d jeweils auch eine plane Sekundärfläche 144 auf. Die Sekundärfläche 144 ist hier parallel zu der Auflagefläche 28 ausgerichtet und liegt der Auflagefläche 28 gegenüber. Zwischen der Sekundärfläche 144 und einer Anschraubfläche 146 der Bundschraube 140 ist jeweils eine weitere Dichtscheibe 18 angeordnet. Um eine stufenlose Anlage der Dichtscheibe 18 an dem Bund 142 zu ermöglichen, weist die Anschraubfläche 146 jeweils eine runde Außenkontur und einen abgerundeten Übergang 148 in den Bund 142 auf.

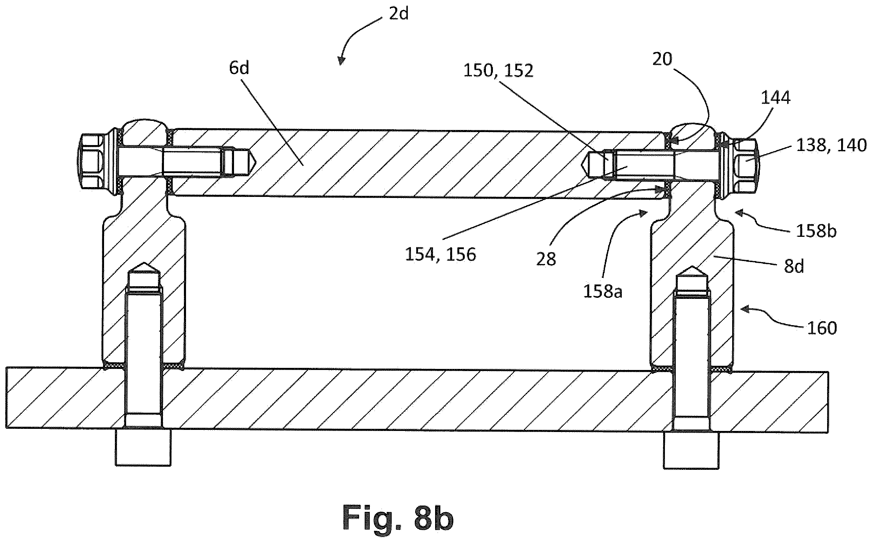

Die **Figur 8b** zeigt einen schematischen Querschnitt durch das erfindungsgemäße Bügelgriffsystem 2d von Fig. 8a. Der Griffsteg 6d weist an den beiden Anlageflächen 20 jeweils einen Gewindeabschnitt 150 auf, der hier als Gewindebohrung 152 ausgeführt ist. Der Gewindeabschnitt 150 ist jeweils orthogonal zu der Anlagefläche 20 ausgerichtet. Die als das Befestigungsmittel 138 dienende Bundschraube 140 weist einen korrespondierenden Gewindeabschnitt 154 auf, der hier entsprechend als Gewindezapfen 156 ausgebildet ist. Die Griffschenkel 8d können mit den Bundschrauben 140 in beliebiger relativer Verdrehung zueinander an dem Griffsteg 6d befestigt werden. Die Auflagefläche 28 und die Sekundärfläche 144 sind hier jeweils als Rücknehmungen 158a, 158b im Zylindermantel 160 des ansonsten im Wesentlichen zylinderförmigen Griffschenkels 8d ausgebildet.

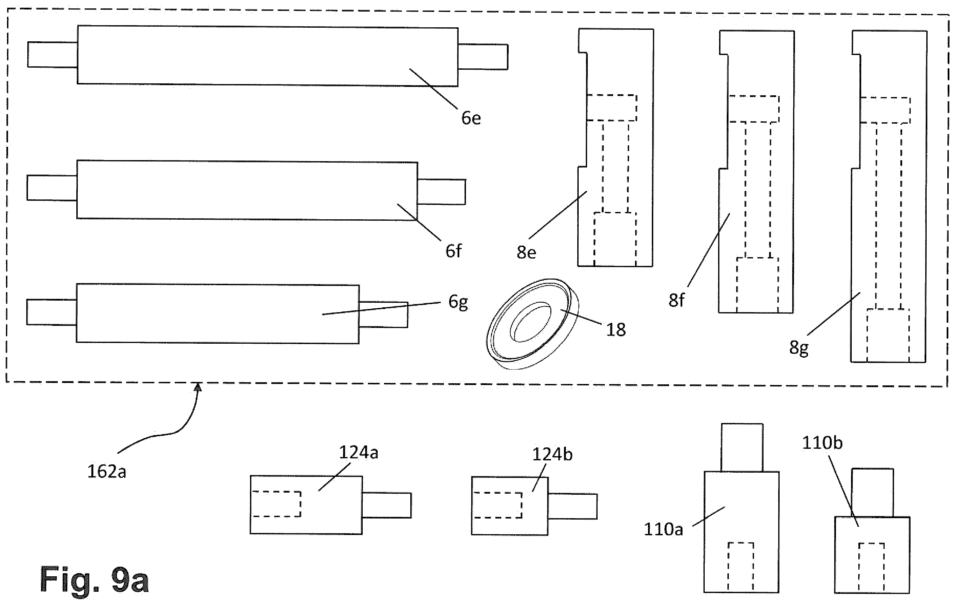

In der **Figur 9a** ist eine schematische Übersicht über ein erstes erfindungsgemäßes modulares Bügelgriffsystem 162a abgebildet. Das modulare Bügelgriffsystem 162a umfasst hier mehrere unterschiedlich lange Griffstege 6e-6g und mehrere unterschiedlich lange Griffschenkel 8e-8g sowie mehrere Dichtscheiben 18. Zusätzlich kann das modulare Bügelgriffsystem 162a noch wenigstens ein Verlängerungsstück 124a, 124b und wenigstens ein Distanzstück 110a, 110b umfassen. Ein Griffsteg 6e-6g, welcher mit einem Verlängerungsstück 124a, 124b verbunden wird, dient dann als ein Griffsteghauptstück. Ein Griffschenkel 8e-8g, welcher mit einem Distanzstück 110a, 110b verbunden wird, dient dann als ein Griffschenkelstumpf.

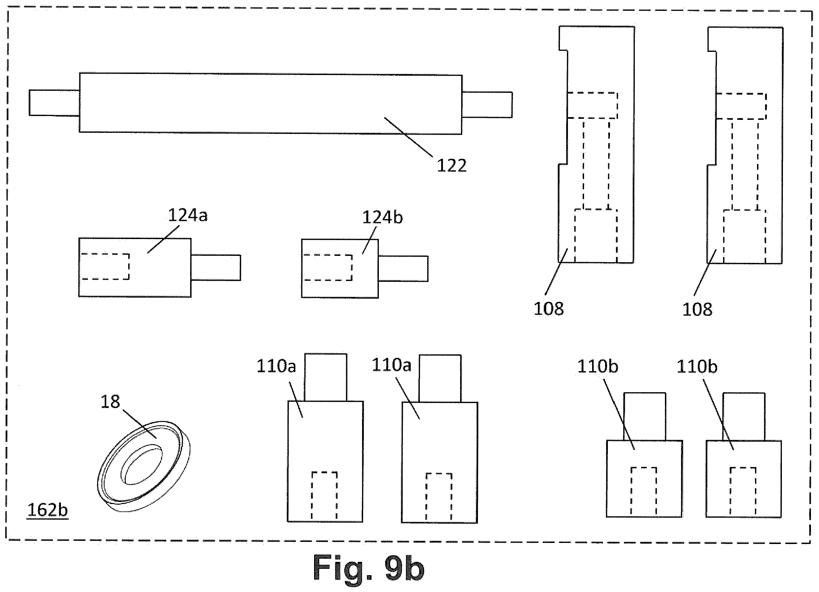

Die **Figur 9b** zeigt eine schematische Übersicht über ein zweites erfindungsgemäßes modulares Bügelgriffsystem 162b. Das modulare Bügelgriffsystem 162b umfasst zwei typischerweise gleiche Griffschenkelstümpfe 108, ein Griffsteghauptstück 122, mehrere Dichtscheiben 18 sowie jeweils mehrere verschiedene, hier unterschiedlich lange Distanzstücke 110a, 110b und Verlängerungsstücke 124a, 124b zur Verbindung mit den Griffschenkelstümpfen 108 bzw. dem Griffsteghauptstück 122. Man beachte, dass typischerweise für jede Länge von Distanzstück 110a, 110b jeweils zwei Distanzstücke 110a, 110b zur Verfügung stehen.

Die in den Fig. 9a und 9b angedeuteten Verbindungssysteme (insbesondere Bohrungen und Zapfen) an den Griffstegen 6e-6g, Griffschenkeln 8e-8g, Griffsteghauptstücken 122, Griffschenkelstümpfen 108, Verlängerungsstücken 124a, 124b und Distanzstücken 110a, 110b sind hierbei nur exemplarisch zu verstehen. Erfindungsgemäße modulare Bügelgriffsysteme 162a, 162b können auch mit allen anderen oben beschriebenen oder sonstigen zweckmäßigen Verbindungssystemen ausgestaltet werden.

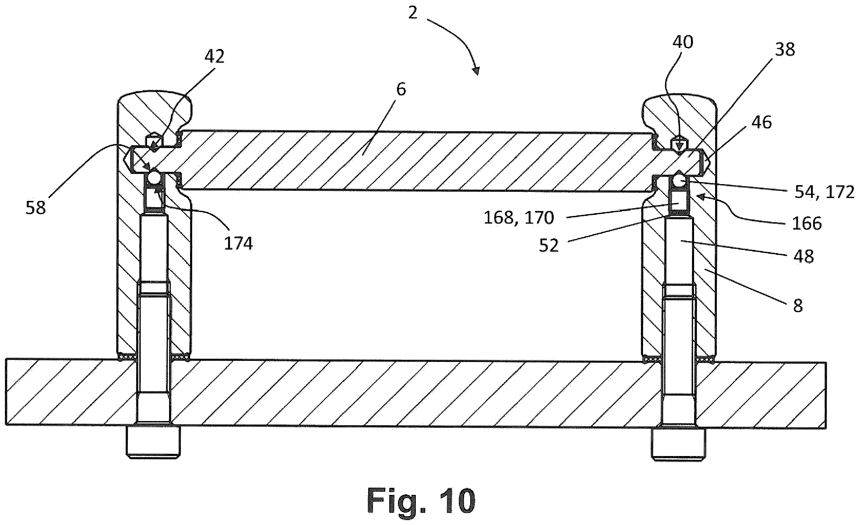

In der **Figur 10** ist schematisch eine weitere Ausführungsform eines erfindungsgemäßen Bügelgriffsystems 2 dargestellt. Das Bügelgriffsystem 2 ist hier beidseitig mit einer mehrteiligen Kontaktiereinrichtung 166 zur Befestigung des jeweiligen Griffschenkels 8 an dem Griffsteg 6 ausgebildet. Die Kontaktiereinrichtung 166 umfasst hier ein Positionierelement 168 und ein Kontaktstück 54. Das Positionierelement 168 ist als eine Stiftschraube 170 mit stumpfer Spitze ausgeführt, die in dem inneren Gewindeabschnitt 52 angeordnet ist. Das Kontaktstück 54 ist hier als eine Kugel 172 ausgebildet.

Die Kugel 172 stützt sich auf dem Positionierelement 168 ab. Eine Stützfläche 174 in Form einer Kugelkappe wird durch einen ersten, hier unteren Teilbereich einer Oberfläche der Kugel 172 ausgebildet. Durch den lokal begrenzten, zentralen Kontakt zwischen dem Positionierelement 168 und der Stützfläche 174 kann eine rotatorische Entkopplung des Positionierelements 168 von dem Kontaktstück 54, hier der Kugel 172, erreicht werden. Dadurch wird ein Verdrehen der Griffschenkel 8 gegenüber dem Griffsteg 6 ermöglicht, ohne dass beim Verdrehen die Gefahr besteht, das Positionierelement 168 zu lösen oder weiter anzuziehen.

Eine zweite Kontaktfläche 58 des Kontaktstücks 54, die hier von einem zweiten, oberen Teilbereich der Oberfläche der Kugel 172 gebildet wird, kann durch Einschrauben des Positionierelements 168 in den inneren Gewindeabschnitt 52 in Eingriff mit der ersten Kontaktfläche 42 der Nut 40 des Zapfens 38 gehalten werden.

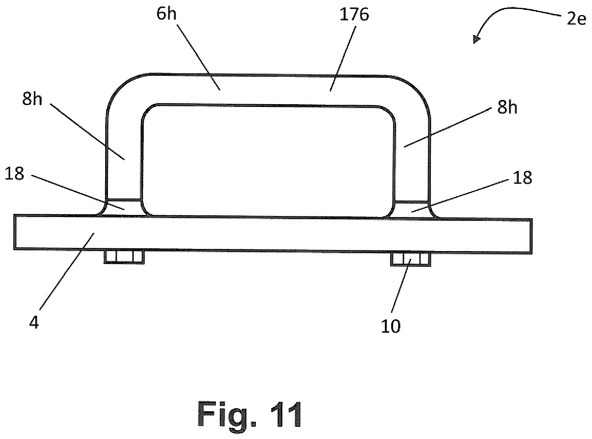

Die **Figur 11** zeigt schematisch eine weitere Ausführungsform eines erfindungsgemäßen Bügelgriffsystems 2e. Der Bügelgriff 176 ist hier einteilig ausgeführt. Die Griffschenkel 8h sind als gegenüber dem Griffsteg 6h abgebogene Segmente eines Rundmaterials ausgebildet. Zwischen den Griffschenkeln 8h und der Struktur 4 ist jeweils eine Dichtscheibe 18 angeordnet. Der Bügelgriff 176 ist mit Schrauben 10 an der Struktur 4 befestigt. Man beachte, dass der Bügelgriff 176 alternativ auch kontinuierlich gekrümmt, insbesondere halbkreisförmig gekrümmt, ausgebildet sein kann.

Erfindungsgemäße Bügelgriffsysteme können insbesondere in der Lebensmittelindustrie (einschließlich der Getränkeindustrie), der pharmazeutischen Industrie und der Medizintechnik eingesetzt werden.

## Patentansprüche

1. Bügelgriffsystem (2; 2a-2e) für Hygieneanwendungen, umfassend einen Bügelgriff (32; 176) zur Montage an einer Struktur (4; 4a), wobei eine außenliegende Grifffläche (30) des Bügelgriffs (32; 176) einen Mittenrauwert Ra von höchstens 0,8 µm aufweist,
**dadurch gekennzeichnet,**
**dass** der Bügelgriff (32; 176) an zwei voneinander entfernten Enden jeweils eine plane Montagefläche (12) mit runder Außenkontur aufweist,
**dass** der Bügelgriff (32; 176) an den Enden jeweils einen Gewindeabschnitt (34; 114) zur Befestigung des Bügelgriffs (32; 176) an der Struktur (4; 4a) aufweist,
**dass** die Montageflächen (12) jeweils radial außen abgerundete Übergänge (14) zu einer Mantelfläche (16) des Bügelgriffs (32; 176) hin aufweisen, und
**dass** das Bügelgriffsystem (2; 2a-2e) weiterhin zwei Dichtscheiben (18) zur Anordnung zwischen den Montageflächen (12) und der Struktur (4; 4a) umfasst,
wobei die Dichtscheiben (18) jeweils eine radial innen liegende Tragscheibe (74) und einen radial außen liegenden umlaufenden Dichtkörper (76) aus einem Elastomer aufweisen, wobei der Dichtkörper (76) im entspannten Zustand einen im Wesentlichen trapezförmigen Querschnitt (80) aufweist, der sich nach radial außen hin in axialer Richtung aufweitet, und der zumindest an seinem radial äußeren Ende dicker ist als die Tragscheibe (74).

2. Bügelgriffsystem (2; 2a-2d) nach Anspruch 1, **dadurch gekennzeichnet,**
**dass** wenigstens ein Griffschenkel (8; 8a; 8d-8g) des Bügelgriffs (32) eine plane Auflagefläche (28) aufweist,
**dass** ein Griffsteg (6; 6a-6g) des Bügelgriffs (32) wenigstens eine plane Anlagefläche (20) aufweist,
**dass** das Bügelgriffsystem (2; 2a-2d) für jedes Paar von Auflagefläche (28) und Anlagefläche (20) weiterhin eine Dichtscheibe (18) zwischen der Anlagefläche (20) und der Auflagefläche (28) umfasst, wobei die Dichtscheibe (18) eine radial innen liegende Tragscheibe (74) und einen radial außen liegenden umlaufenden Dichtkörper (76) aus einem Elastomer aufweist, wobei der Dichtkörper (76) im entspannten Zustand einen im Wesentlichen trapezförmigen Querschnitt (80) aufweist, der sich nach radial außen hin in axialer Richtung aufweitet, und der zumindest an seinem radial äußeren Ende dicker ist als die Tragscheibe (74), und
**dass** der wenigstens eine Griffschenkel (8; 8a; 8d-8g) an dem Griffsteg (6; 6a-6g) des Bügelgriffs (32) befestigt ist.

3. Bügelgriffsystem (2; 2a-2d) nach Anspruch 2, **dadurch gekennzeichnet, dass** der wenigstens eine Griffschenkel (8; 8a; 8d-8g) an dem Griffsteg (6; 6a-6g) drehbar befestigt ist.

4. Bügelgriffsystem (2; 2a-2d) nach Anspruch 2 oder 3, **dadurch gekennzeichnet, dass** die wenigstens eine Anlagefläche (20) des Griffstegs (6; 6a-6g) eine runde Außenkontur aufweist, und dass die wenigstens eine Anlagefläche (20) des Griffstegs (6; 6a-6g) radial außen einen abgerundeten Übergang (22) zu einer Mantelfläche (24) des Griffstegs (6; 6a-6g) aufweist.

5. Bügelgriffsystem (2; 2a-2c) nach Anspruch 2, 3 oder 4, **dadurch gekennzeichnet,**
**dass** an der Anlagefläche (20) des Griffstegs (6; 6a-6c; 6e-6g) ein Zapfen (38) ausgebildet ist, der eine zumindest teilweise umlaufende Nut (40) mit einer ersten Kontaktfläche (42) aufweist,
**dass** der Griffschenkel (8; 8a; 8e-8g) an der Auflagefläche (28) eine erste Ausnehmung (46) aufweist, in der der Zapfen (38) des Griffstegs (6; 6a-6c; 6e-6g) aufgenommen ist,
**dass** der Griffschenkel (8; 8a; 8e-8g) eine zweite Ausnehmung (48) aufweist, welche sich von der Montagefläche (12) zur ersten Ausnehmung (46) erstreckt, so dass die beiden Ausnehmungen (46, 48) einen gemeinsamen Hohlraum (50) bilden, und
**dass** innerhalb der zweiten Ausnehmung (48) in dem Griffschenkel (8, 8a) ein Kontaktstück (54) mit einer zweiten Kontaktfläche (58) angeordnet ist, die an der ersten Kontaktfläche (42) anliegt.

6. Bügelgriffsystem (2; 2a-2c) nach Anspruch 5, **dadurch gekennzeichnet, dass** die zweite Ausnehmung (48) des Griffschenkels (8, 8a) einen inneren Gewindeabschnitt (52) zur Positionierung des Kontaktstücks (54) aufweist.

7. Bügelgriffsystem (2; 2a-2c) nach Anspruch 6, **dadurch gekennzeichnet, dass** das Kontaktstück (54) als eine Stiftschraube (56) ausgeführt ist, die in dem inneren Gewindeabschnitt (52) der zweiten Ausnehmung (48) angeordnet ist, wobei die zweite Kontaktfläche (58) von einer konischen Spitze (60) der Stiftschraube (56) gebildet wird.

8. Bügelgriffsystem (2; 2a-2c) nach Anspruch 6, **dadurch gekennzeichnet, dass** in der zweiten Ausnehmung (48) eine mehrteilige Kontaktiereinrichtung (166), umfassend das Kontaktstück (54) und ein Positionierelement (168) für das Kontaktstück (54), angeordnet ist, dass sich das Kontaktstück (54) mittelbar über ein Stützelement oder unmittelbar an dem Positionierelement (168) abstützt, dass das Positionierelement (168) in den inneren Gewindeabschnitt (52) eingreift, und dass eine Stützfläche (174) an dem Kontaktstück (54) oder dem Stützelement oder dem Positionierelement (168) als Kugelkappe ausgebildet ist, insbesondere wobei sich die Stützfläche (174) auf einer stumpfen Spitze des Positionierelements (168) abstützt.

9. Bügelgriffsystem (2d) nach Anspruch 2, 3 oder 4, **dadurch gekennzeichnet,**
**dass** an dem wenigstens einen Griffschenkel (8d) eine plane Sekundärfläche (144) ausgebildet ist, die parallel zu der Auflagefläche (28) ausgerichtet ist und die der Auflagefläche (28) gegenüber liegt,
**dass** der Griffsteg (6d) an der Anlagefläche (20) einen orthogonal zu der Anlagefläche (20) ausgerichteten Gewindeabschnitt (150) aufweist,
**dass** das Bügelgriffsystem (2d) ein Befestigungsmittel (138) umfasst, das einen Gewindeabschnitt (154) aufweist, um in den Gewindeabschnitt (150) des Griffstegs (6d) einzugreifen,
**dass** das Befestigungsmittel (138) eine Anschraubfläche (146) mit einer runden Außenkontur und radial außen einen abgerundeten Übergang (148) in einen Bund (142) des Befestigungsmittels (138) aufweist, und
**dass** das Bügelgriffsystem (2d) weiterhin eine Dichtscheibe (18) zur Anordnung zwischen der Anschraubfläche (146) und der Sekundärfläche (144) umfasst, wobei die Dichtscheibe (18) eine radial innen liegende Tragscheibe (74) und einen radial außen liegenden umlaufenden Dichtkörper (76) aus einem Elastomer aufweist, wobei der Dichtkörper (76) im entspannten Zustand einen im Wesentlichen trapezförmigen Querschnitt (80) aufweist, der sich nach radial außen hin in axialer Richtung aufweitet, und der zumindest an seinem radial äußeren Ende dicker ist als die Tragscheibe (74).

10. Bügelgriffsystem (2; 2a; 2b; 2d) nach einem der Ansprüche 2 bis 9, **dadurch gekennzeichnet, dass** zwei Griffschenkel (8; 8a; 8d-8g) um eine gemeinsame Achse (44) drehbar an dem Griffsteg (6; 6a; 6b; 6d-6g) angeordnet sind.

11. Bügelgriffsystem (2c) nach einem der Ansprüche 2 bis 9, **dadurch gekennzeichnet, dass** zwei Griffschenkel (8) um gegeneinander verschränkte Achsen (130a, 130b) drehbar an dem Griffsteg (6c) angeordnet sind.

12. Bügelgriffsystem (2; 2a-2d) nach einem der Ansprüche 2 bis 11, **dadurch gekennzeichnet, dass** der Griffsteg (6; 6a; 6b; 6d-6g) im Wesentlichen zylinderförmig ausgebildet ist.

13. Bügelgriffsystem (2; 2a-2d) nach einem der Ansprüche 2 bis 12, **dadurch gekennzeichnet, dass** der Griffsteg (6a) ein hohles Mittelstück (100) aufweist, an welchem zwei Endstücke (102) befestigt sind, an denen jeweils eine plane Anlagefläche (20) des Griffstegs (6a) ausgebildet ist.

14. Bügelgriffsystem (2; 2a-2d) nach einem der Ansprüche 2 bis 13, **dadurch gekennzeichnet, dass** der Griffschenkel (8; 8a; 8d-8g) im Wesentlichen zylinderförmig ausgebildet ist, und dass die Auflagefläche (28) durch eine Rücknehmung (26; 158a) im Zylindermantel (160) ausgebildet ist.

15. Bügelgriffsystem (2; 2a-2e) nach einem der vorhergehenden Ansprüche,
**dadurch gekennzeichnet, dass** die Grifffläche (30) einen Mittenrauwert Ra von höchstens 0,4 µm, insbesondere von höchstens 0,1 µm, aufweist.

16. Bügelgriffsystem (2a; 2b) nach einem der vorhergehenden Ansprüche,
**dadurch gekennzeichnet,**
**dass** wenigstens ein Griffschenkel (8a) des Bügelgriffs (32) an wenigstens einer Trennfuge (106) in wenigstens zwei Griffschenkelabschnitte, insbesondere in einen Griffschenkelstumpf (108), an dem der Griffsteg (6a; 6b) befestigt ist, und in wenigstens ein Distanzstück (110; 110a, 110b), aufgeteilt ist,
**dass** zwei benachbarte Griffschenkelabschnitte an der gemeinsamen Trennfuge (106) jeweils plane Trennflächen (111a, 111b), insbesondere mit runder Außenkontur, aufweisen,
**dass** die Trennflächen (111a, 111b) radial außen abgerundete Übergänge (14a, 14b) zu einer Mantelfläche (16a, 16b) des jeweiligen Griffschenkelabschnitts aufweisen, und
**dass** das Bügelgriffsystem (2a; 2b) für jede Trennfuge (106) eine weitere Dichtscheibe (18) umfasst, die zwischen den Trennflächen (111a, 111b) angeordnet ist, wobei die Dichtscheibe (18) jeweils eine radial innen liegende Tragscheibe (74) und einen radial außen liegenden umlaufenden Dichtkörper (76) aus einem Elastomer aufweist, wobei der Dichtkörper (76) im entspannten Zustand jeweils einen im Wesentlichen trapezförmigen Querschnitt (80) aufweist, der sich nach radial außen hin in axialer Richtung aufweitet, und der zumindest an seinem radial äußeren Ende dicker ist als die Tragscheibe (74).

17. Bügelgriffsystem (2b) nach einem der vorhergehenden Ansprüche, **dadurch gekennzeichnet,**
**dass** ein Griffsteg (6b) des Bügelgriffs (32) an wenigstens einer Teilungsfuge (120) in wenigstens zwei Griffstegabschnitte, insbesondere in ein Griffsteghauptstück (122) und in wenigstens ein Verlängerungsstück (124; 124a, 124b), aufgeteilt ist,
**dass** zwei benachbarte Griffstegabschnitte an der gemeinsamen Teilungsfuge (120) jeweils plane Teilungsflächen (125a, 125b), insbesondere mit runder Außenkontur, aufweisen,
**dass** die Teilungsflächen (125a, 125b) radial außen abgerundete Übergänge (22a, 22b) zu einer Mantelfläche (24a, 24b) des jeweiligen Griffstegabschnitts aufweisen,
insbesondere wobei die Radien zweier benachbarter Griffstegabschnitte einander entsprechen, und
**dass** das Bügelgriffsystem (2b) für jede Teilungsfuge (120) eine weitere Dichtscheibe (18) umfasst, die zwischen den Teilungsflächen (125a, 125b) angeordnet ist, wobei die Dichtscheibe (18) jeweils eine radial innen liegende Tragscheibe (74) und einen radial außen liegenden umlaufenden Dichtkörper (76) aus einem Elastomer aufweist, wobei der Dichtkörper (76) im entspannten Zustand jeweils einen im Wesentlichen trapezförmigen Querschnitt (80) aufweist, der sich nach radial außen hin in axialer Richtung aufweitet, und der zumindest an seinem radial äußeren Ende dicker ist als die Tragscheibe (74).

18. Modulares Bügelgriffsystem (162a), umfassend
- mehrere unterschiedliche Griffschenkel (8e-8g), insbesondere unterschiedlich lange einteilige Griffschenkel (8e-8g) oder mehrteilige Griffschenkel mit unterschiedlich langen Griffschenkelstümpfen, und/oder
- mehrere unterschiedliche Griffstege (6e-6g), insbesondere unterschiedlich lange einteilige Griffstege (6e-6g) oder mehrteilige Griffstege mit unterschiedlich langen Griffsteghauptstücken, sowie
- mehrere Dichtscheiben (18), wobei die Dichtscheiben (18) jeweils eine radial innen liegende Tragscheibe (74) und einen radial außen liegenden umlaufenden Dichtkörper (76) aus einem Elastomer aufweisen, wobei der Dichtkörper (76) im entspannten Zustand einen im Wesentlichen trapezförmigen Querschnitt (80) aufweist, der sich nach radial außen hin in axialer Richtung aufweitet, und der zumindest an seinem radial äußeren Ende dicker ist als die Tragscheibe (74),
wobei sich durch Auswahl aus den Einzelteilen ein Bügelgriffsystem (2, 2a-2d) nach einem der Ansprüche 1 bis 15 zusammenstellen lässt, das einen Bügelgriff (32) zur Montage an einer Struktur (4; 4a) umfasst,
wobei eine außenliegende Grifffläche (30) des Bügelgriffs (32) einen Mittenrauwert Ra von höchstens 0,8 µm aufweist,
wobei der Bügelgriff (32) an zwei voneinander entfernten Enden jeweils eine plane Montagefläche (12) mit runder Außenkontur aufweist,
wobei der Bügelgriff (32) an den Enden jeweils einen Gewindeabschnitt (34; 114) zur Befestigung des Bügelgriffs (32) an der Struktur (4; 4a) aufweist, wobei die Montageflächen (12) jeweils radial außen abgerundete Übergänge (14) zu einer Mantelfläche (16) des Bügelgriffs (32) hin aufweisen.

19. Modulares Bügelgriffsystem (162a) nach Anspruch 18, **dadurch gekennzeichnet, dass** das modulare Bügelgriffsystem (162a) weiterhin Distanzstücke (110a, 110b) und/oder Verlängerungsstücke (124a, 124b) umfasst, insbesondere wobei die Distanzstücke (110a, 110b) und/oder die Verlängerungsstücke (124a, 124b) unterschiedliche Längen aufweisen, und dass sich durch Auswahl aus den Einzelteilen auch ein Bügelgriffsystem (2a; 2b) nach Anspruch 16 oder 17 zusammenstellen lässt.

20. Modulares Bügelgriffsystem (162b), umfassend
- zwei Griffschenkelstümpfe (108),
- ein Griffsteghauptstück (122) und
- mehrere Dichtscheiben (18), wobei die Dichtscheiben (18) jeweils eine radial innen liegende Tragscheibe (74) und einen radial außen liegenden umlaufenden Dichtkörper (76) aus einem Elastomer aufweisen, wobei der Dichtkörper (76) im entspannten Zustand einen im Wesentlichen trapezförmigen Querschnitt (80) aufweist, der sich nach radial außen hin in axialer Richtung aufweitet, und der zumindest an seinem radial äußeren Ende dicker ist als die Tragscheibe (74), sowie
- mehrere unterschiedliche Distanzstücke (110a, 110b) und/oder mehrere unterschiedliche Verlängerungsstücke (124a, 124b), insbesondere wobei die Distanzstücke (110a, 110b) und/oder die Verlängerungsstücke (124a, 124b) unterschiedliche Längen aufweisen,
und wobei sich durch Auswahl aus den Einzelteilen ein Bügelgriffsystem (2a; 2b) nach einem der Ansprüche 16 oder 17 zusammenstellen lässt, das einen Bügelgriff (32) zur Montage an einer Struktur (4) umfasst,
wobei eine außenliegende Grifffläche (30) des Bügelgriffs (32) einen Mittenrauwert Ra von höchstens 0,8 µm aufweist,
wobei der Bügelgriff (32) an zwei voneinander entfernten Enden jeweils eine plane Montagefläche (12) mit runder Außenkontur aufweist,
wobei der Bügelgriff (32) an den Enden jeweils einen Gewindeabschnitt (114) zur Befestigung des Bügelgriffs (32) an der Struktur (4) aufweist,
wobei die Montageflächen (12) jeweils radial außen abgerundete Übergänge (14) zu einer Mantelfläche (16) des Bügelgriffs (32) hin aufweisen.

21. Verfahren zur Montage eines Bügelgriffsystems (2; 2a-2c) nach einem der Ansprüche 5 bis 8, umfassend die Schritte:
a) Anordnen der Dichtscheibe (18) zwischen der Anlagefläche (20) des Griffstegs (6; 6a-6c; 6e-6g) und der Auflagefläche (28) des Griffschenkels (8; 8a; 8e-8g),
b) Ausrichten des Zapfens (38) des Griffstegs (6; 6a-6c; 6e-6g) mit der ersten Ausnehmung (46) des Griffschenkels (8; 8a; 8e-8g),
c) Einpressen des Zapfens (38) in die erste Ausnehmung (46) mittels einer Presse, bis die Tragscheibe (74) der Dichtscheibe (18) zwischen der Anlagefläche (20) und der Auflagefläche (28) verklemmt ist, und Aufrechterhalten der Presskraft,
d) Andrücken der zweiten Kontaktfläche (58) des Kontaktstücks (54) an die erste Kontaktfläche (42) des Zapfens (38),
e) Zurücknehmen der Presskraft.

## Claims

1. Bracket handle system (2; 2a-2e) for hygiene applications, comprising a bracket handle (32; 176) for mounting on a structure (4; 4a), wherein an exterior handle surface (30) of the bracket handle (32; 176) has a roughness average Ra of no more than 0.8 µm,
**characterized in that**
the bracket handle (32; 176) has on each of two ends distant from each other a plane mounting surface (12) with a round external contour,
the bracket handle (32; 176) has on each of the ends a thread portion (34; 114) for attaching the bracket handle (32; 176) to the structure (4; 4a),
the mounting surfaces (12) each have transitions (14) that are rounded in a radial outward manner to a lateral surface (16) of the bracket handle (32; 176), and
the bracket handle system (2; 2a-2e) also comprises two sealing disks (18) for arranging between the mounting surfaces (12) and the structure (4; 4a),
wherein the sealing disks (18) each have a radially inner support disk (74) and a radially outer circumferential sealing body (76) made of an elastomer, wherein the sealing body (76) in a relaxed state has an substantially trapezoidal cross-section (80), which widens radially outward in an axial direction, and which is, at least on its radially outer end, thicker than the support disk (74).

2. Bracket handle system (2; 2a-2d) according to claim 1, **characterized in that**
at least one gripping arm (8; 8a; 8d-8g) of the bracket handle (32) has a plane support surface (28),
a grip member (6; 6a-6g) of the bracket handle (32) has at least one plane abutment surface (20),
the bracket handle system (2; 2a-2d) also comprises for every support surface (28) and abutment surface (20) pair a sealing disk (18) between the abutment surface (20) and the support surface (28), wherein the sealing disk (18) has a radially inner support disk (74) and a radially outer circumferential sealing body (76) made of an elastomer, wherein the sealing body (76) in a relaxed state has a substantially trapezoidal cross-section (80), which widens radially outward in an axial direction, and which is thicker at least on its radially outer end than the support disk (74), and
the at least one gripping arm (8; 8a; 8d-8g) is attached to the grip member (6; 6a-6g) of the bracket handle (32).

3. Bracket handle system (2; 2a-2d) according to claim 2, **characterized in that** the at least one gripping arm (8; 8a; 8d-8g) is rotatably attached to the grip member (6; 6a-6g).

4. Bracket handle system (2; 2a-2d) according to claim 2 or 3, **characterized in that** the at least one abutment surface (20) of the grip member (6; 6a-6g) has a round external contour, and that the at least one abutment surface (20) of the grip member (6; 6a-6g) has a transition (22), which is rounded in a radial outward manner, to a lateral surface (24) of the grip member (6; 6a-6g).

5. Bracket handle system (2; 2a-2c) according to claim 2, 3 or 4, **characterized in that**
on the abutment surface (20) of the grip member (6; 6a-6c; 6e-6g), there is formed a lug (38), which has an at least partially circumferential groove (40) having a first contact surface (42),
the griping arm (8; 8a; 8e-8g) has on the support surface (28) a first recess (46), in which the lug (38) of the grip member (6; 6a-6c; 6e-6g) is accommodated,
the griping arm (8; 8a; 8e-8g) has a second recess (48), which extends from the mounting surface (12) to the first recess (46) so that the two recesses (46, 48) form a common cavity (50), and
within the second recess (48) in the gripping arm (8, 8a), a contact part (54) is arranged, having a second contact surface (58), which abuts the first contact surface (42).

6. Bracket handle system (2; 2a-2c) according to claim 5, **characterized in that** the second recess (48) of the gripping arm (8, 8a) has an inner thread portion (52) for positioning the contact piece (54).

7. Bracket handle system (2; 2a-2c) according to claim 6, **characterized in that** the contact piece (54) is designed as a pin screw (56), which is arranged in the inner thread portion (52) of the second recess (48), wherein the second contact surface (58) is formed by a conical tip (60) of the pin screw (56).

8. Bracket handle system (2; 2a-2c) according to claim 6, **characterized in that** a multipiece contacting device (166), comprising the contact piece (54) and a positioning element (168) for the contact piece (54), is arranged in the second recess (48), the contact piece (54) is supported indirectly by means of a support element or directly on the position element (168), the positioning element (168) engages in the inner thread portion (52), and a supporting face (174) is formed as a spherical cap on the contact piece (54) or the support element or the positioning element (168), particularly wherein the supporting face (174) is supported on a blunt tip of the positioning element (168).

9. Bracket handle system (2d) according to claim 2, 3 or 4, **characterized in that**
on the at least one gripping arm (8d), there a plane secondary surface (144) formed, which is oriented parallel to the support surface (28) and lies opposite to the support surface (28),
the grip member (6d) has on the abutment surface (20) a thread portion (150) oriented orthogonally to the abutment surface (20),
the bracket handle system (2d) comprises an attachment means (138), which has a thread portion (154) to engage in the thread portion (150) of the grip member (6d),
the attachment means (138) has a screw-on surface (146) having a round external contour and a radially outwardly rounded transition (148) into a collar (142) of the attachment means (138), and
the bracket handle system (2d) also comprises a sealing disk (18) for arranging between the screw-on surface (146) and the secondary surface (144), wherein the sealing disk (18) has a radially inner support disk (74) and a radially outer circumferential sealing body (76) made of an elastomer, wherein the sealing body (76) in a relaxed state has a substantially trapezoidal cross-section (80), which widens radially outward in an axial direction, and which is at least on its radially outer end thicker than the support disk (74).

10. Bracket handle system (2; 2a; 2b; 2d) according to one of the claims 2 to 9, **characterized in that** two gripping arms (8; 8a; 8d-8g) are rotatably arranged around a common axis (44) on the grip member (6; 6a; 6b; 6d-6g).

11. Bracket handle system (2c) according to one of the claims 2 to 9, **characterized in that** two gripping arms (8) are rotatably arranged around mutually crossed axes (130a, 130b) on the grip member (6c).

12. Bracket handle system (2; 2a-2d) according to one of the claims 2 to 11, **characterized in that** the grip member (6; 6a; 6b; 6d-6g) is formed in an essentially cylindrical shape.

13. Bracket handle system (2; 2a-2d) according to one of the claims 2 to 12, **characterized in that** the grip member (6a) has a hollow center piece (100) to which are attached two end pieces (102) on each of which a plane abutment surface (20) of the grip member (6a) is formed.

14. Bracket handle system (2; 2a-2d) according to one of the claims 2 to 13, **characterized in that** the gripping arm (8; 8a; 8d-8g) is formed in a substantially cylindrical shape, and that the support surface (28) is formed by a withdrawal (26; 158a) in the cylinder shell (160).

15. Bracket handle system (2; 2a-2e) according to one of the preceding claims, **characterized in that** the gripping surface (30) has a roughness average Ra of no more than 0.4 µm, particularly no more than 0.1 µm.

16. Bracket handle system (2a; 2b) according to one of the preceding claims, **characterized in that**
at least one gripping arm (8a) of the bracket handle (32), at least at one separating joint (106), is divided into at least two gripping arm portions, particularly into a gripping arm stub (108) to which the grip member (6a; 6b) is attached, and into at least one spacing piece (110; 110a; 110b),
two adjoining gripping arm portions each have, at the common separating joint (106), plane separation surfaces (111a, 111b), particularly with a round external contour,
the separation surfaces (111a, 111b) have transitions (14a, 14b), which are rounded in a radial outward manner, to a lateral surface (16a, 16b) of the respective gripping arm portion, and
the bracket handle system (2a; 2b) comprises for every separating joint (106) an additional sealing disk (18), which is arranged between the separation surfaces (111a, 111b), wherein the sealing disk (18) has in each case a radially inner support disk (74) and a radially outer circumferential sealing body (76) made of an elastomer, wherein the sealing body (76) in a relaxed state has in each case a substantially trapezoidal cross-section (80), which widens radially outwardly in an axial direction, and which is thicker at least at its radially outer end than the support disk (74).

17. Bracket handle system (2b) according to one of the preceding claims, **characterized in that**
a grip member (6b) of the bracket handle (32) is divided, at least at one dividing joint (120), into at least two grip member portions, particularly into a grip member main piece (122) and into at least one extension piece (124; 124a, 124b),
two adjoining grip member portions each have at the common dividing joint (120) plane division surfaces (125a, 125b), particularly having a round external contour,
the division surfaces (125a, 125b) have transitions (22a, 22b), which are rounded in a radial outward manner, to a lateral surface (24a, 24b) of the respective grip member portion,
particularly wherein the radii of two adjoining grip member portions correspond to each other, and
the bracket handle system (2b) comprises for every dividing joint (120) an additional sealing disk (18), which is arranged between the division surfaces (125a, 125b), wherein the sealing disk (18) has in each case a radially inner support disk (74) and a radially outer circumferential sealing body (76) made of an elastomer, wherein the sealing body (76) in a relaxed state has in each case a substantially trapezoidal cross-section (80), which widens radially outwards in an axial direction, and which is thicker at least at its radially outer end than the support disk (74).

18. Modular bracket handle system (162a), comprising
- a plurality of different gripping arms (8e-8g), particularly different-length single-piece gripping arms (8e-8g) or multi-piece gripping arms with different-length gripping arm stubs, and/or
- a plurality of different grip members (6e-6g), particularly different-length single-piece grip members (6e-6g) or multi-piece grip members having different-length grip member main pieces, as well as
- a plurality of sealing disks (18), wherein the sealing disks (18) each have a radially inner support disk (74) and a radially outer circumferential sealing body (76) made of an elastomer, wherein the sealing body (76) in a relaxed state has a substantially trapezoidal cross-section (80), which widens radially outwards in an axial direction, and which is thicker at least at its radially outer end than the support disk (74).
wherein by selecting from the individual parts, one can assemble a bracket handle system (2, 2a-2d) according to one of the claims 1 to 15, which comprises a bracket handle (32) for mounting to a structure (4; 4a), wherein an external handle surface (30) of the bracket handle (32) has a roughness average Ra of no more than 0.8 µm,
wherein the bracket handle (32) has on each of two ends distant from each other a plane mounting surface (12) having a round external contour,
wherein the bracket handle (32) has on each end a thread position (34; 114) for attaching the bracket handle (32) to the structure (4; 4a),
wherein the mounting surfaces (12) each have radially outwardly rounded transitions (14) to a lateral surface (16) of the bracket handle (32).

19. Modular bracket handle system (162a) according to claim 18, **characterized in that** the modular bracket handle system (162a) also comprises spacing pieces (110a, 110b) and/or extension pieces (124a, 124b), particularly wherein the spacing pieces (110a, 110b) and/or the extension pieces (124a, 124b) have various lengths, and that by selecting from the individual parts, one can also assemble a bracket handle system (2a; 2b) according to claim 16 or 17.

20. Modular bracket handle system (162b) comprising
- two gripping arm stubs (108),
- one grip member main piece (122) and
- a plurality of sealing disks (18), wherein the sealing disk (18) each have a radially inner support disk (74) and a radially outer circumferential sealing body (76) made of an elastomer, wherein the sealing body (76) in a relaxed state has a substantially trapezoidal cross-section (80), which widens radially outwards in an axial direction, and which is thicker at least at its radially outer end than the support disk (74), as well as
- a plurality of different spacing pieces (110a, 110b) and/or a plurality of different extension pieces (124a, 124b), particularly wherein the spacing pieces (110a, 110b) and/or the extension pieces (124a, 124b) have various lengths,
and wherein by the selection from the individual parts, one can assemble a bracket handle system (2a; 2b) according to one of the claims 16 or 17, which comprises a bracket handle (32) for mounting on a structure (4),
wherein an external handle surface (30) of the bracket handle (32) has a roughness average Ra of no more than 0.8 µm,
wherein the bracket handle (32) has on each of two ends distant from each other a plane mounting surface (12) with a round external contour,
wherein the bracket handle (32) has on each end a thread portion (114) for attaching the bracket handle (32) to the structure (4),
wherein the mounting surfaces (12) each have transitions (14), which are rounded in a radial outward manner, to a lateral surface (16) of the bracket handle (32).

21. Method for mounting a bracket handle system (2; 2a-2c) according to one of the claims 5 to 8, comprising the steps:
a) Arranging the sealing disk (18) between the abutment surface (20) of the grip member (6; 6a-6c; 6e-6g) and the support surface (28) of the gripping arm (8; 8a; 8e-8g),
b) Aligning the lug (38) of the grip member (6; 6a-6c; 6e-6g) to the first recess (46) of the gripping arm (8; 8a; 8e-8g),
c) Pressing the lug (38) into the first recess (46) by means of a press until the support disk (74) of the sealing disk (18) is clamped between the abutment surface (20) and the support surface (28), and maintaining the pressing force,
d) Pressing the second contact surface (58) of the contact piece (54) against the first contact surface (42) of the lug (38),
e) Withdrawing the pressing force.

## Revendications

1. Système (2 ; 2a-2e) à poignée en forme d'étrier pour applications hygiéniques, comprenant une poignée en étrier (32 ; 176) destinée au montage sur une structure (4 ; 4a), une surface extérieure de préhension (30) de ladite poignée en étrier (32 ; 176) présentant une valeur de rugosité moyenne Ra de 0,8 µm au maximum, **caractérisé par le fait**
**que** la poignée en étrier (32 ; 176) est respectivement munie, à deux extrémités éloignées l'une de l'autre, d'une surface plane de montage (12) à profil extérieur rond ;
**que** ladite poignée en étrier (32 ; 176) est dotée, aux extrémités, d'une région filetée respective (34 ; 114) dévolue à la fixation de ladite poignée en étrier (32 ; 176) à ladite structure (4 ; 4a) ;
**que** les surfaces de montage (12) sont respectivement pourvues de transitions (14), extérieurement arrondies dans le sens radial, vers une surface d'enveloppe (16) de ladite poignée en étrier (32 ; 176) ; et
**que** ledit système (2 ; 2a-2e) à poignée en forme d'étrier comprend, en outre, deux disques d'étanchement (18) conçus pour être interposés entre lesdites surfaces de montage (12) et ladite structure (4 ; 4a),
lesdits disques d'étanchement (18) étant constitués, à chaque fois, d'un disque de support (74) occupant une position radialement intérieure et d'un corps périphérique d'étanchement (76) en un élastomère, occupant une position radialement extérieure, lequel corps d'étanchement (76) présente, à l'état soulagé, une section transversale (80) substantiellement trapézoïdale qui s'élargit axialement vers l'extérieur, dans le sens radial, et qui est plus épaisse que ledit disque de support (74), au moins à son extrémité radialement extérieure.

2. Système (2 ; 2a-2d) à poignée en forme d'étrier, selon la revendication 1, **caractérisé par le fait**
**qu'**au moins une jambe de préhension (8 ; 8a ; 8d-8g) de la poignée en étrier (32) est munie d'une surface plane d'adossement (28) ;
**qu'**une membrure de préhension (6 ; 6a-6g) de ladite poignée en étrier (32) est dotée d'au moins une surface plane (20) de venue en applique ;
**que** ledit système (2 ; 2a-2d) à poignée en forme d'étrier comprend en outre, pour chaque paire composée de la surface d'adossement (28) et de la surface (20) de venue en applique, un disque d'étanchement (18) interposé entre ladite surface (20) de venue en applique et ladite surface d'adossement (28), ledit disque d'étanchement (18) étant constitué d'un disque de support (74) occupant une position radialement intérieure et d'un corps périphérique d'étanchement (76) en un élastomère, occupant une position radialement extérieure, lequel corps d'étanchement (76) présente, à l'état soulagé, une section transversale (80) substantiellement trapézoïdale qui s'élargit axialement vers l'extérieur, dans le sens radial, et qui est plus épaisse que ledit disque de support (74), au moins à son extrémité radialement extérieure ; et
**que** la jambe de préhension (8 ; 8a ; 8d-8g), à présence minimale, est fixée à la membrure de préhension (6 ; 6a-6g) de ladite poignée en étrier (32).

3. Système (2; 2a-2d) à poignée en forme d'étrier, selon la revendication 2, **caractérisé par le fait que** la jambe de préhension (8 ; 8a ; 8d-8g), à présence minimale, est fixée à la membrure de préhension (6 ; 6a-6g) avec faculté de rotation.

4. Système (2 ; 2a-2d) à poignée en forme d'étrier, selon la revendication 2 ou 3, **caractérisé par le fait que** la surface (20) de venue en applique, à présence minimale sur la membrure de préhension (6 ; 6a-6g), est munie d'un profil extérieur rond ; et **par le fait que** ladite surface (20) de venue en applique, à présence minimale sur ladite membrure de préhension (6 ; 6a-6g), comporte une transition (22) extérieurement arrondie, dans le sens radial, avec une surface d'enveloppe (24) de ladite membrure de préhension (6 ; 6a-6g).

5. Système (2 ; 2a-2c) à poignée en forme d'étrier, selon la revendication 2, 3 ou 4, **caractérisé par le fait**
**qu'**un tenon (38), ménagé sur la surface (20) de venue en applique de la membrure de préhension (6 ; 6a-6c ; 6e-6g), est muni d'une rainure (40) au moins partiellement périphérique qui présente une première surface de contact (42) ;
**que** la jambe de préhension (8 ; 8a ; 8e-8g) est dotée, sur la surface d'adossement (28), d'un premier évidement (46) par lequel ledit tenon (38) de la membrure de préhension (6 ; 6a-6c ; 6e-6g) est reçu ;
**que** ladite jambe de préhension (8 ; 8a ; 8e-8g) est pourvue d'un second évidement (48) s'étendant vers ledit premier évidement (46), à partir de la surface de montage (12), de façon telle que les deux évidements (46, 48) forment une cavité commune (50) ; et qu'une pièce de contact (54), logée à l'intérieur dudit second évidement (48) dans la jambe de préhension (8 ; 8a), présente une seconde surface de contact (58) en applique contre ladite première surface de contact (42).

6. Système (2 ; 2a-2c) à poignée en forme d'étrier, selon la revendication 5, **caractérisé par le fait que** le second évidement (48) de la jambe de préhension (8 ; 8a) est muni d'une région filetée intérieure (52), en vue du positionnement de la pièce de contact (54).

7. Système (2 ; 2a-2c) à poignée en forme d'étrier, selon la revendication 6, **caractérisé par le fait que** la pièce de contact (54) est réalisée sous la forme d'un pointeau (56) logé dans la région filetée intérieure (52) du second évidement (48), la seconde surface de contact (58) étant formée par une pointe conique (60) dudit pointeau (56).

8. Système (2 ; 2a-2c) à poignée en forme d'étrier, selon la revendication 6, **caractérisé par le fait qu'**un dispositif (166) de venue en contact composé de plusieurs parties, incluant la pièce de contact (54) et un élément de positionnement (168) affecté à ladite pièce de contact (54), est logé dans le second évidement (48) ; **par le fait que** ladite pièce de contact (54) est en appui contre ledit élément de positionnement (168), directement ou indirectement par l'intermédiaire d'un élément d'appui ; **par le fait que** ledit élément de positionnement (168) pénètre dans la région filetée intérieure (52) ; et **par le fait qu'**une surface d'appui (174) est réalisée sous la forme d'une calotte sphérique, sur ladite pièce de contact (54) ou sur ledit élément d'appui ou sur ledit élément de positionnement (168), sachant notamment que ladite surface d'appui (174) est en appui contre une pointe émoussée dudit élément de positionnement (168).

9. Système (2d) à poignée en forme d'étrier, selon la revendication 2, 3 ou 4, **caractérisé par le fait**
**qu'**une surface secondaire plane (144), ménagée sur la jambe de préhension (8d) à présence minimale, est orientée parallèlement à la surface d'adossement (28) et est située en vis-à-vis de ladite surface d'adossement (28) ;
**que** la membrure de préhension (6d) est munie, sur la surface (20) de venue en applique, d'une région filetée (150) orientée perpendiculairement à ladite surface (20) de venue en applique ;
**que** ledit système (2d) à poignée en forme d'étrier comprend un moyen de fixation (138) doté d'une région filetée (154), en vue de pénétrer dans ladite région filetée (150) de la membrure de préhension (6d) ;
**que** le moyen de fixation (138) est pourvu d'une surface (146) de rattachement par vissage, à profil extérieur rond, et d'une transition (148) extérieurement arrondie, dans le sens radial, avec un collet (142) dudit moyen de fixation (138) ; et
**que** ledit système (2d) à poignée en forme d'étrier comprend, en outre, un disque d'étanchement (18) conçu pour être interposé entre ladite surface (146) de rattachement par vissage et ladite surface secondaire (144), ledit disque d'étanchement (18) étant constitué d'un disque de support (74) occupant une position radialement intérieure et d'un corps périphérique d'étanchement (76) en un élastomère, occupant une position radialement extérieure, lequel corps d'étanchement (76) présente, à l'état soulagé, une section transversale (80) substantiellement trapézoïdale qui s'élargit axialement vers l'extérieur, dans le sens radial, et qui est plus épaisse que ledit disque de support (74), au moins à son extrémité radialement extérieure.

10. Système (2; 2a ; 2b ; 2d) à poignée en forme d'étrier, selon l'une des revendications 2 à 9, **caractérisé par le fait que** deux jambes de préhension (8 ; 8a ; 8d-8g) sont agencées, sur la membrure de préhension (6 ; 6a ; 6b ; 6d-6g), avec faculté de rotation autour d'un axe commun (44).

11. Système (2c) à poignée en forme d'étrier, selon l'une des revendications 2 à 9, **caractérisé par le fait que** deux jambes de préhension (8) sont agencées, sur la membrure de préhension (6c), avec faculté de rotation autour d'axes (130a, 130b) à entrecroisement mutuel.

12. Système (2 ; 2a-2d) à poignée en forme d'étrier, selon l'une des revendications 2 à 11, **caractérisé par le fait que** la membrure de préhension (6 ; 6a ; 6b ; 6d-6g) est de réalisation substantiellement cylindrique.

13. Système (2 ; 2a-2d) à poignée en forme d'étrier, selon l'une des revendications 2 à 12, **caractérisé par le fait que** la membrure de préhension (6a) est pourvue d'une pièce centrale creuse (100) à laquelle sont fixées deux pièces d'extrémité (102) sur lesquelles est ménagée, à chaque fois, une surface plane (20) de venue en applique de ladite membrure de préhension (6a).

14. Système (2 ; 2a-2d) à poignée en forme d'étrier, selon l'une des revendications 2 à 13, **caractérisé par le fait que** la jambe de préhension (8 ; 8a ; 8d-8g) est de réalisation substantiellement cylindrique ; et **par le fait que** la surface d'adossement (28) est constituée d'une dépouille (26 ; 158a) pratiquée dans l'enveloppe (160) du cylindre.

15. Système (2 ; 2a-2e) à poignée en forme d'étrier, selon l'une des revendications précédentes, **caractérisé par le fait que** la surface de préhension (30) présente une valeur de rugosité moyenne Ra de 0,4 µm au maximum, en particulier de 0,1 µm au maximum.

16. Système (2a ; 2b) à poignée en forme d'étrier, selon l'une des revendications précédentes, **caractérisé par le fait**
**qu'**au moins une jambe de préhension (8a) de la poignée en étrier (32) est scindée, au niveau d'au moins un joint de séparation (106), en au moins deux régions et, en particulier, en un tronçon (108) auquel la membrure de préhension (6a ; 6b) est fixée, et en au moins une pièce d'espacement (110 ; 110a ; 110b) ;
**que** deux régions adjacentes de ladite jambe de préhension sont respectivement munies, au niveau du joint commun de séparation (106), de surfaces planes de séparation (111a, 111b) notamment dotées d'un profil extérieur rond ;
**que** lesdites surfaces de séparation (111a, 111b) présentent des transitions (14a, 14b) extérieurement arrondies, dans le sens radial, avec une surface d'enveloppe (16a, 16b) de la région considérée de ladite jambe de préhension ; et
**que** ledit système (2a ; 2b) à poignée en forme d'étrier comprend, pour chaque joint de séparation (106), un disque supplémentaire d'étanchement (18) interposé entre lesdites surfaces de séparation (111a, 111b), ledit disque d'étanchement (18) étant constitué, à chaque fois, d'un disque de support (74) occupant une position radialement intérieure et d'un corps périphérique d'étanchement (76) en un élastomère, occupant une position radialement extérieure, lequel corps d'étanchement (76) présente à chaque fois, à l'état soulagé, une section transversale (80) substantiellement trapézoïdale qui s'élargit axialement vers l'extérieur, dans le sens radial, et qui est plus épaisse que ledit disque de support (74), au moins à son extrémité radialement extérieure.

17. Système (2b) à poignée en forme d'étrier, selon l'une des revendications précédentes, **caractérisé par le fait**
**qu'**une membrure de préhension (6b) de la poignée en étrier (32) est scindée, au niveau d'au moins un joint de séparation (120), en au moins deux régions et, en particulier, en une pièce principale (122) et en au moins une pièce de prolongement (124 ; 124a, 124b) ; que deux régions adjacentes de ladite membrure de préhension sont respectivement munies, au niveau du joint commun de séparation (120), de surfaces planes de séparation (125a, 125b) notamment dotées d'un profil extérieur rond ;
**que** lesdites surfaces de séparation (125a, 125b) présentent des transitions (22a, 22b) extérieurement arrondies, dans le sens radial, avec une surface d'enveloppe (24a, 24b) de la région considérée de ladite membrure de préhension,
sachant, en particulier, que les rayons de deux régions adjacentes de ladite membrure de préhension se correspondent mutuellement ;
et **que** ledit système (2b) à poignée en forme d'étrier comprend, pour chaque joint de séparation (120), un disque supplémentaire d'étanchement (18) interposé entre lesdites surfaces de séparation (125a, 125b), ledit disque d'étanchement (18) étant constitué, à chaque fois, d'un disque de support (74) occupant une position radialement intérieure et d'un corps périphérique d'étanchement (76) en un élastomère, occupant une position radialement extérieure, lequel corps d'étanchement (76) présente à chaque fois, à l'état soulagé, une section transversale (80) substantiellement trapézoïdale qui s'élargit axialement vers l'extérieur, dans le sens radial, et qui est plus épaisse que ledit disque de support (74), au moins à son extrémité radialement extérieure.

18. Système modulaire (162a) à poignées en forme d'étrier, comprenant
- plusieurs jambes de préhension (8e-8g) différentes, notamment des jambes monobloc de préhension (8e-8g) différemment longues, ou des jambes de préhension en plusieurs parties munies de tronçons différemment longs, et/ou
- plusieurs membrures de préhension (6e-6g) différentes, notamment des membrures monobloc de préhension (6e-6g) différemment longues, ou des membrures de préhension en plusieurs parties munies de pièces principales différemment longues, ainsi que
- plusieurs disques d'étanchement (18), lesdits disques d'étanchement (18) étant constitués, à chaque fois, d'un disque de support (74) occupant une position radialement intérieure et d'un corps périphérique d'étanchement (76) en un élastomère, occupant une position radialement extérieure, lequel corps d'étanchement (76) présente, à l'état soulagé, une section transversale (80) substantiellement trapézoïdale qui s'élargit axialement vers l'extérieur, dans le sens radial, et qui est plus épaisse que ledit disque de support (74), au moins à son extrémité radialement extérieure,
une sélection, opérée au sein des pièces individuelles, permettant alors d'assembler un système (2, 2a-2d) à poignée en forme d'étrier, conforme à l'une des revendications 1 à 15, comprenant une poignée en étrier (32) destinée au montage sur une structure (4 ; 4a), sachant qu'une surface extérieure de préhension (30) de ladite poignée en étrier (32) présente une valeur de rugosité moyenne Ra de 0,8 µm au maximum,
sachant que la poignée en étrier (32) est respectivement munie, à deux extrémités éloignées l'une de l'autre, d'une surface plane de montage (12) à profil extérieur rond, sachant que ladite poignée en étrier (32) est dotée, aux extrémités, d'une région filetée respective (34 ; 114) dévolue à la fixation de ladite poignée en étrier (32) à ladite structure (4 ; 4a),
sachant que les surfaces de montage (12) sont respectivement pourvues de transitions (14), extérieurement arrondies dans le sens radial, vers une surface d'enveloppe (16) de ladite poignée en étrier (32).

19. Système modulaire (162a) à poignées en forme d'étrier, selon la revendication 18, **caractérisé par le fait que** ledit système modulaire (162a) à poignées en forme d'étrier est équipé, par ailleurs, de pièces d'espacement (110a, 110b) et/ou de pièces de prolongement (124a, 124b), sachant notamment que lesdites pièces d'espacement (110a, 110b) et/ou lesdites pièces de prolongement (124a, 124b) présentent des longueurs différentes ; et **par le fait qu'**un système (2a ; 2b) à poignée en forme d'étrier, conforme à la revendication 16 ou 17, peut également être assemblé par sélection opérée au sein des pièces individuelles.

20. Système modulaire (162b) à poignées en forme d'étrier, comprenant
- deux tronçons (108) de jambes de préhension,
- une pièce principale (122) de membrure de préhension et
- plusieurs disques d'étanchement (18), lesdits disques d'étanchement (18) étant constitués, à chaque fois, d'un disque de support (74) occupant une position radialement intérieure et d'un corps périphérique d'étanchement (76) en un élastomère, occupant une position radialement extérieure, lequel corps d'étanchement (76) présente, à l'état soulagé, une section transversale (80) substantiellement trapézoïdale qui s'élargit axialement vers l'extérieur, dans le sens radial, et qui est plus épaisse que ledit disque de support (74), au moins à son extrémité radialement extérieure, ainsi que
- plusieurs pièces d'espacement (110a, 110b) différentes et/ou plusieurs pièces de prolongement (124a, 124b) différentes, sachant notamment que lesdites pièces d'espacement (110a, 110b) et/ou lesdites pièces de prolongement (124a, 124b) présentent des longueurs différentes,
et sachant qu'une sélection, opérée au sein des pièces individuelles, permet d'assembler un système (2a ; 2b) à poignée en forme d'étrier, conforme à l'une des revendications 16 ou 17, comprenant une poignée en étrier (32) destinée au montage sur une structure (4), sachant qu'une surface extérieure de préhension (30) de ladite poignée en étrier (32) présente une valeur de rugosité moyenne Ra de 0,8 µm au maximum,
sachant que la poignée en étrier (32) est respectivement munie, à deux extrémités éloignées l'une de l'autre, d'une surface plane de montage (12) à profil extérieur rond, sachant que ladite poignée en étrier (32) est dotée, aux extrémités, d'une région filetée respective (114) dévolue à la fixation de ladite poignée en étrier (32) à ladite structure (4), sachant que les surfaces de montage (12) sont respectivement pourvues de transitions (14), extérieurement arrondies dans le sens radial, vers une surface d'enveloppe (16) de ladite poignée en étrier (32).

21. Procédé de montage d'un système (2 ; 2a-2c) à poignée en forme d'étrier, conforme à l'une des revendications 5 à 8, incluant les étapes consistant à :
a) interposer le disque d'étanchement (18) entre la surface (20) de venue en applique de la membrure de préhension (6 ; 6a-6c ; 6e-6g) et la surface d'adossement (28) de la jambe de préhension (8 ; 8a ; 8e-8g),
b) aligner le tenon (38) de ladite membrure de préhension (6 ; 6a-6c ; 6e-6g) avec le premier évidement (46) de ladite jambe de préhension (8 ; 8a ; 8e-8g),
c) emmancher à force ledit tenon (38) dans ledit premier évidement (46), au moyen d'une presse, jusqu'à ce que le disque de support (74) dudit disque d'étanchement (18) soit coincé entre ladite surface (20) de venue en applique et ladite surface d'adossement (28), avec maintien de la force de pression,
d) presser la seconde surface de contact (58) de la pièce de contact (54) contre la première surface de contact (42) dudit tenon (38),
e) relâcher ladite force de pression.
